(19) **Europäisches Patentamt**

**European Patent Office**

**Office européen des brevets**

(11) **EP 1 734 094 A1**

(12) **EUROPEAN PATENT APPLICATION**
published in accordance with Art. 158(3) EPC

(43) Date of publication:
    **20.12.2006 Bulletin 2006/51**

(21) Application number: **05726728.8**

(22) Date of filing: **18.03.2005**

(51) Int Cl.:
    **C09J 7/02** (2006.01)      **C09J 123/00** (2006.01)
    **C09J 123/14** (2006.01)

(86) International application number:
    **PCT/JP2005/004960**

(87) International publication number:
    **WO 2005/090505** (29.09.2005 Gazette 2005/39)

(84) Designated Contracting States:
    **AT BE BG CH CY CZ DE DK EE ES FI FR GB GR
    HU IE IS IT LI LT LU MC NL PL PT RO SE SI SK TR**

(30) Priority: **19.03.2004 JP 2004079338**

(71) Applicant: **Mitsui Chemicals, Inc.
    Tokyo 105-7117 (JP)**

(72) Inventors:
    • **AIHARA, Shin,**
      **c/o Mitsui Chemicals, Inc.**
      **Aichi 4578522 (JP)**
    • **OZAKI, Katsutoshi,**
      **c/o Mitsui Chemicals Inc.**
      **Sodegaura-shi,**
      **Chiba 2990265 (JP)**

    • **MORI, Ryoji,**
      **c/o Mitsui Chemicals Inc.**
      **Sodegaura-shi,**
      **Chiba 2990265 (JP)**
    • **SARUWATARI, Masumi,**
      **c/o Mitsui Chemicals Inc.**
      **Sodegaura-shi,**
      **Chiba 2990265 (JP)**
    • **YOKOYAMA, Takashi,**
      **c/o Mitsui Chemicals Inc.**
      **Sodegaura-shi,**
      **Chiba 2990265 (JP)**

(74) Representative: **Wytenburg, Wilhelmus Johannes
    Mewburn Ellis LLP
    York House
    23 Kingsway
    London WC2B 6HP (GB)**

(54) **ADHESIVE MATERIAL, PRESSURE SENSITIVE ADHESIVE FILM AND METHOD OF USE THEREOF**

(57)    An adhesive material and a pressure sensitive adhesive film containing the same of the present invention are **characterized in that** they satisfy the following requirements (a) and (b). These adhesive material and pressure sensitive adhesive film of the present invention exhibit excellent stability against not only light and heat but also various chemicals. Consequently, they are suitable applications in surface protection uses, transport storage uses, heating treatment uses, grinding/polishing uses, cutting processing uses and transport/storage uses in the fields of electronic/semiconductor materials, optical/display materials and the like, where demands for performances and qualities are strict. The above requirements are: (a) an olefinic polymer is contained, and (b) by measurement according to a differential scanning calorimetry test, the melting temperature Tm is in the range of 80°C to 180°C and the heat of fusion ΔH is at least 1 J/g.

Fig. 7

**Description**

TECHNICAL FIELD

The present invention relates to an adhesive material, a pressure sensitive adhesive film and a method of use thereof.

BACKGROUND ART

In "Handbook of Pressure Sensitive Adhesive Technology, first published by The Nikkan Kensetsu Kogyo Shimbun on March 31, 1997" compiled by Donatas Satas and translated by Hirsohi Mizumachi, as an adhesive material, there have been disclosed a natural rubber type adhesive agent, a styrene/butadiene latex type adhesive agent, a thermoplastic rubber, an ABA block copolymer, a butyl rubber, an acrylic type adhesive agent, acrylic type dispersion modification, a vinyl ether polymer, a silicone rubber type adhesive agent, a styrene/butadiene rubber, a butadiene/acrylonitrile rubber, polyisobutylene, polybutadiene, polychloroprene, polyurethane, an ethylene/vinyl acetate copolymer, atactic polypropylene and the like. In particular, there has been mentioned that the acrylic type adhesive agent or rubber type adhesive agent is widely used for various applications.

As an adhesive film, there have been developed various types of adhesive films with an acrylic type adhesive agent or a rubber type adhesive agent coated on a base material film made of polyvinyl chloride, polyethylene terephthalate (PET), polyimide, polyolefin and the like. Examples of an adhesive agent which has conventionally been used include an acrylic type adhesive agent having an enhanced cohesive force obtained by crosslinking an acrylic type copolymer with a reactive material such as an isocyanate compound, a methylol compound or the like, a rubber type adhesive agent in which a natural rubber or modified natural rubber is combined with a low molecular weight material such as a tackifier, and the like. However, when the acrylic type adhesive agent is repeeled away, there is a problem in that an adhesive residue on an adherend, deformation, discoloration or the like easily occurs under the influence of the reactive material, unreacted acrylic acid or the like. Furthermore, the rubber type adhesive agent has a problem in that adhesive residue easily occurs due to the low molecular weight material such as a tackifier or the like.

In "Hitachi Chemical Technical Report, Vol. 32, pp. 7-14 (2002)" written by Matsuoka, there has been described a surface protecting adhesive film to be used in relation to the display in which high performance and high functionality are required. Among these adhesive films, as an adhesive film for protecting a surface of a prism sheet used for a liquid crystal display (LCD), there has been reported an adhesive film product satisfying the requirements such that the adhesive film is not peeled away from the uneven surface of the prism sheet and is easily peeled away therefrom after use. Furthermore, in "Hitachi Chemical Technical Report, Vol. 41, pp. 23-26 (2003)" written by Simane et al., there has been reported an adhesive film which is stabilized to such an extent that the shear elastic modulus G' in the range of 50°C to 100°C is around 2 to 3 MPa. Furthermore, there has been introduced a case of developing an adhesive film in which high performance and high functionality are required, such as optically functional sheets or the like, by suppressing the increase of adhesion under heating at 80°C after 7 days to about 1.3 to 1.4 times.

In Japanese Patent Application Laid-Open No. 2003-213485, there has been disclosed an adhesive film in which an adhesive agent comprises a propylene type copolymer obtained from copolymerization components containing propylene, $\alpha$-olefin having 4 to 12 carbon atoms and ethylene, and which does not have an endothermic peak of not less than 1 J/g when measured by DSC. There has been described that the aforementioned specific propylene type copolymer has excellent initial adhesiveness and is superior in immersion resistance to a plating solution and resistance to corrosion, as compared to conventional acrylic type adhesive agents. However, the adhesive film has been evaluated only by attaching it to a copper foil, allowing to stand at 40°C and 92% RH for 3 days for peeling away, and then visually observing an adhesive residue on the copper foil and discoloration, whereas contamination of the adhesive film assuming use environments such as a temperature for treating actual plating, a chemical solution or the like has not been evaluated.

Further, in Japanese Patent Application Laid-Open No. 1999-315175, syndiotactic/atactic block polypropylene and a method of using thereof have been disclosed. However, an adhesive material and an adhesive film are not described therein.

Further, in Japanese Patent Application Laid-Open No. 1995-233354, there has been disclosed an adhesive film using an adhesive material comprising an $\alpha$-olefin copolymer having 2 to 12 carbon atoms with the degree of crystallinity of not more than 10%. There has been described that the adhesive film has advantages such that initial adhesive strength at room temperature is high and a change with time in the adhesive strength after attachment is small, therefore it is suitable for surface protection uses of a metal plate, a resin plate or a glass plate, and a change in the adhesive strength under warming and heating does not occur, assuming during a period of transportation or storage. However, there have not been described performance and qualities of an adhesive material required for various uses other than surface protection uses and transport storage uses in the fields of electronic/semiconductor materials, optical/display materials and the like where demands for performance or qualities are strict.

Patent Document 1: Japanese Patent Application Laid-Open No. 2003-213485
Patent Document 2: Japanese Patent Application Laid-Open No. 1999-315175
Patent Document 3: Japanese Patent Application Laid-Open No. 1999-315175
Patent Document 4: Japanese Patent Application Laid-Open No. 1995-233354
Non-Patent Document 1: Handbook of Pressure Sensitive Adhesive Technology first published by The Nikkan Kensetsu Kogyo Shimbun on March 31, 1997
Non-Patent Document 2: Hitachi Chemical Technical Report, Vol. 32, pp. 7-14 (2002)

DISCLOSURE OF INVENTION

An object of the present invention is to provide an adhesive material exhibiting excellent stability against not only light and heat but also various chemicals, and having excellent repeeling properties, an adhesive film using the adhesive material and a method of using thereof. More specifically, an object of the present invention is to provide an adhesive material combining performances and qualities required for surface protection uses, transport storage uses, treatment uses with a chemical solution, heating treatment uses, grinding/polishing uses and cutting processing uses in the fields of electronic/semiconductor materials, optical/display materials and the like, where demands for performance and qualities are strict, an adhesive film using the adhesive material and a method of using thereof.

In order to solve the above objects, the present inventors have repeatedly conducted an extensive study and, as a result, have found that an olefinic polymer having specific thermal characteristics exhibited excellent properties as an adhesive material. They have further found that an adhesive film in which such kind of adhesive material was laminated on a base material layer combined the characteristics which are contradictory to each other, i.e., adhesive properties at low temperatures and heat resistant properties, and had excellent stability against not only light and heat but also liquid chemicals such as a plating solution, an etching solution or the like. Further, they have found that, in a method of using the adhesive film, even when the adhesive film is used for various applications such as electronic/semiconductor materials, optical/display materials and the like, it substantially caused no contamination due to an adhesive residue after repeeling and satisfied performance and qualities required for an adherend. Thus, the present invention has been completed.

That is, a first invention is:

(1) An adhesive material satisfying the following requirements (a) and (b):

(a) the adhesive material comprises at least one kind of an olefinic polymer; and

(b) by measurement according to a differential scanning calorimetry test, the melting temperature Tm is in the range of 80°C to 180°C and the heat of fusion $\Delta H$ is at least 1 J/g.

(2) The adhesive material further satisfying the following requirement (c) is a preferred embodiment in terms of maintaining adhesion from room temperature to the temperature at a heating treatment:

(c) in the viscoelasticity test, the storage elastic modulus G' at a temperature range of 20°C to 80°C is in the range of 0.1 to 50 MPa while the loss coefficient tan $\delta$ at a temperature range of 20°C to 80°C is at least 0.05.

(3) The adhesive material further satisfying the following requirement (d) is a preferred embodiment as it is well wetted by an adherend and easy to tightly attach thereto at room temperature:

(d) the peak of the loss coefficient tan $\delta$ is in the range of -20°C to +10°C.

(4) The olefinic polymer containing a copolymer having tacticity (hereinafter referred to as PX) obtained by polymerizing 90 to 60 mole % of a propylene component with 10 to 40 mole % of at least one olefin component selected from ethylene and olefins having 4 to 12 carbon atoms is a preferred embodiment from the viewpoint that the adhesive material can be peeled away without contaminating the adherend due to high cohesive force and that an adhesive layer can easily be formed.

(5) The adhesive material further comprising an additional olefinic polymer (hereinafter referred to as PY), wherein the additional olefinic polymer (PY) is a polypropylene having the same tacticity as the copolymer having tacticity (PX), and wherein the polymer ratio {(PX)/(PY)} is in the range of a weight ratio of 99/1 to 40/60 is a preferred embodiment as heat stability of adhesion is excellent.

A second invention is:

(6) An adhesive film with an adhesive material layer laminated on at least one surface of a base material layer, wherein the adhesive material layer satisfies the following requirements (a) and (b):

(a) the adhesive material layer comprises at least one kind of olefinic polymer; and
(b) by measurement according to a differential scanning calorimetry test, the melting temperature Tm is in the range of 80°C to 180°C and the heat of fusion ΔH is at least 1 J/g.

(7) The adhesive material layer further satisfying the following requirement (c) is a preferred embodiment in terms of maintaining adhesion from room temperature to the temperature at a heating treatment:

(c) the storage elastic modulus G' at a temperature range of 20°C to 80°C is in the range of 0.1 to 50 MPa while the loss coefficient tan δ at a temperature range of 20°C to 80°C is at least 0.05.

(8) The adhesive material layer further satisfying the following requirement (d) is a preferred embodiment as it is well wetted by an adherend and easy to attach thereto at room temperature:

(d) the peak of the loss coefficient tan δ is in the range of -20°C to +10°C.

(9) The olefinic polymer of the adhesive material layer containing a copolymer having tacticity (hereinafter referred to as PX) obtained by polymerizing 90 to 60 mole % of a propylene component with 10 to 40 mole % of at least one olefin component selected from ethylene and olefins having 4 to 12 carbon atoms is a preferred embodiment from the viewpoint that the adhesive film can be peeled away without contaminating the adherend due to high cohesive force and that an adhesive layer can easily be formed.

(10) The adhesive film further comprising an additional olefinic polymer (hereinafter referred to as PY), wherein the additional olefinic polymer (PY) is a polypropylene having the same tacticity as the copolymer having tacticity (PX), and wherein the polymer ratio {(PX)/(PY)} is in the range of a weight ratio of 99/1 to 40/60 is a preferred embodiment as heat stability of adhesion is excellent;

(11) The adhesive film having the total content of each ion extracted by pure water of not more than 1 ppm is a preferred embodiment as it does not cause deformation and discoloration of an adherend.

(12) A base material layer and an adhesive material layer of the adhesive film being formed into a film by a co-extrusion method is a preferred embodiment because an adhesive film is obtained without using a solvent and interlayer adhesion between the adhesive layer and the base material layer is excellent.

A third invention relates to:

(13) A method of using the adhesive film which comprises using the adhesive film for surface protection in combination of at least one application selected from treatment with a chemical solution, heating treatment, grinding processing, polishing processing, cutting processing and transport storage.

The adhesive material and the adhesive film using the same of the present invention have excellent adhesive properties and heat resistance. That is, it is possible to provide an adhesive film which has a high temperature heat resistance near the heat of fusion Tm if the time period is short and heat stability under the conditions assuming the use in transport/storage over a long period of time or the use under pressurizing. Furthermore, the adhesive material and the adhesive film using the same of the present invention are excellent in chemical resistance against an acid, an alkali or the like, made of environment-friendly materials, excellent in energy-saving, excellent in stability against light, excellent in transparency, easily given a function by compounding with other materials due to various properties, and does not substantially contain any corrosive ion or metal ion. Therefore, it is possible to provide an adhesive film which is suitable in the fields of electronic/semiconductor materials, optical/display materials and the like where high performance and qualities are demanded.

BRIEF DESCRIPTION OF DRAWINGS

Fig. 1 is a cross-sectional view illustrating an embodiment of the adhesive film according to the present invention comprising a base material layer 1 and an adhesive material layer 2 laminated on the surface of the base material layer 1.

Fig. 2 is a cross-sectional view illustrating an embodiment of the adhesive film according to the present invention being made of a base material layer 1 comprising an intermediate layer 3 and an outer layer 4, and an adhesive material layer 2 laminated on one surface of the intermediate layer 3.

Fig. 3 is a cross-sectional view illustrating another embodiment of the adhesive film according to the present invention. A base material layer 1, an adhesive material layer 2 laminated on the surface of the base material layer 1 and a peeling film 5 on the side of the adhesive material layer 2 are provided.

Fig. 4 is a cross-sectional view illustrating another embodiment of the adhesive film according to the present invention. The adhesive film is made of a base material layer 1 comprising an intermediate layer 3 and an outer layer 4 and an adhesive material layer 2 laminated on the surface of the intermediate layer 3. A peeling film 5 is provided on the side of the adhesive material layer 2.

Fig. 5 is a perspective view illustrating a state of an adhesive film 10 of the present invention being wound around a roll 6 for storage.

Fig. 6 is a perspective view illustrating a state of the adhesive film 10 of the present invention with a peeling film 5 attached on a side of an adhesive material layer 2 and being wound around a roll 6 for storage.

Fig. 7 is a chart showing the measurement according to a DSC test, where sPER/sPP = 80/20.

Fig. 8 is a chart showing the measurement according to the DSC test, where sPER/sPP = 90/10.

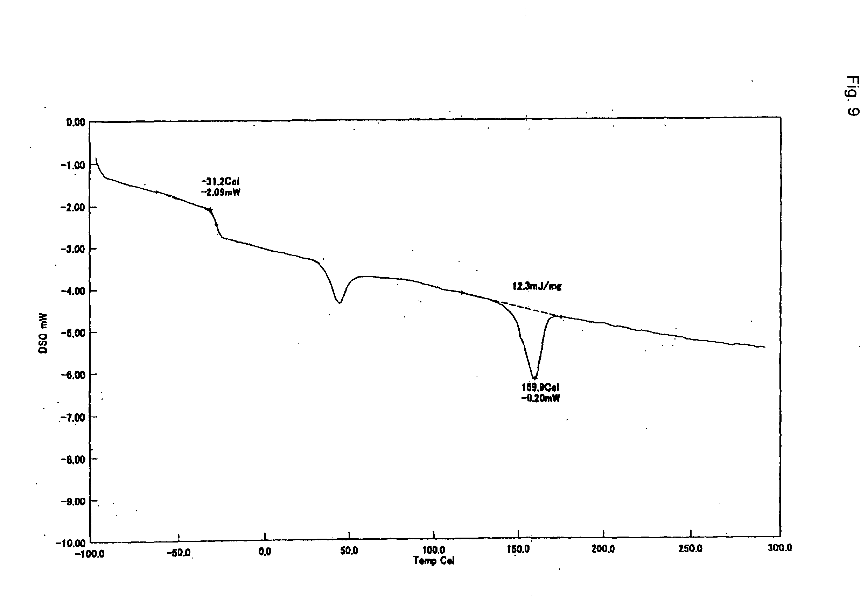

Fig. 9 is a chart showing the measurement according to the DSC test, where iPEBR/iPP = 90/10.

Fig. 10 is a chart showing the measurement according to the DSC test, where sPER = 100 used in Comparative Examples.

Fig. 11 is a picture observed by a TEM, where sPER/sPP = 80/20.

BEST MODE FOR CARRYING OUT THE INVENTION

The adhesive material of the present invention will now be described in more detail.

The adhesive material of the present invention contains an olefinic polymer.

The olefinic polymer has a property of hardly entraining a corrosive ion, a metal ion or the like which can generally become a deteriorating factor and a reduced effect on the environment, and is also inexpensive. Therefore, the olefinic polymer has properties suitable for the adhesive material of the present invention. In the present invention, the olefinic polymer refers to an olefin homopolymer, a copolymer, a block copolymer and an olefinic polymer composition comprising two or more components thereof in some cases. Additionally, in the present invention, ethylene is regarded as a sort of $\alpha$-olefin.

Concrete examples of the olefinic polymer include ethylene type polymers. More concrete examples thereof include ethylene type copolymers comprising various vinyl compounds such as $\alpha$-olefins having 3 to 20 carbon atoms, styrene, vinyl acetate, (meth)acrylic acid, (meth)acrylate and the like as a comonomer, in addition to low density polyethylene, linear low density polyethylene, medium density polyethylene and high density polyethylene.

Furthermore, examples thereof include a propylene homopolymer and a propylene type copolymer obtained by copolymerizing propylene with ethylene or an $\alpha$-olefin having 4 to 20 carbon atoms. The propylene type polymer may be a random copolymer or a block copolymer. Further, examples thereof include $\alpha$-olefin polymers having 4 or more carbon atoms such as butene, 4-methylpentene and the like, though the olefinic polymer of the present invention is not limited to the above compounds. The aforementioned polymer can be used singly or in combination of two or more kinds.

Of these compounds, an olefinic polymer preferably comprises an $\alpha$-olefin copolymer having major unit components of at least two kinds of $\alpha$-olefins selected from $\alpha$-olefins having 2 to 12 carbon atoms from the viewpoint of exhibition of adhesion. Adhesion is a property which is shown from viscoelasticity having both liquid-like and solid-like properties in a room temperature range. Namely, at the time of attachment, a viscous property becomes prevailing because of the low speed deformation and this viscous property has influence on properties of tightly adhering to the unevenness of an adherend. At the time of peeling away, an elastic property becomes prevailing because of high speed deformation, influencing the adhesive force to an adherend and easiness of repeeling.

Examples of $\alpha$-olefin having 2 to 12 carbon atoms include ethylene, propylene, 1-butene, 1-pentene, 3-methyl-1-butene, 1-hexene, 4-methyl-1-pentene, 3-methyl-1-pentene, 1-pentene, 1-octene, 1-decene, 1-dodecene and the like. Examples of a combination which are superior in adhesive aptitude at not more than 80°C include an ethylene/propylene copolymer, an ethylene/1-butene copolymer, a terpolymer of propylene/1-butene/$\alpha$-olefin having 5 to 12 carbon atoms, a terpolymer of ethylene/propylene/$\alpha$-olefin having 4 to 12 carbon atoms, a terpolymer of propylene/1-butene/$\alpha$-olefin having 5 to 12 carbon atoms and the like. Of these components, a propylene type copolymer comprising propylene as a main component is preferable. The proportion of each monomer component forming the propylene type copolymer is not particularly limited. However, in order to achieve good adhesion, the molar ratio between the structure unit derived from propylene and the structure unit derived from the olefin other than propylene is preferably in the range of 1:2 to 20:1, and more preferably in the range of 2:3 to 10:1.

As described above, the olefinic polymer to be used for the adhesive material of the present invention can also be used in combination of two or more kinds. In particular, when heat resistance is valued, a composition of a crystalline olefinic polymer and an olefinic polymer which is excellent in adhesion in its structure is a preferred embodiment. This composition may, of course, be an olefinic block copolymer.

Concrete examples of the above composition include propylene type copolymer compositions. More specifically, a propylene/olefin copolymer having tacticity (PX), in which 90 to 60 mole % of the propylene component showing syndiotacticity or atacticity and 10 to 40 mole % of at least one olefin component selected from ethylene and olefins of 4 to 12 carbon atoms are contained, is more preferable. When the propylene component exceeds 90 mole %, necessary adhesion is lost in some cases. On the other hand, when it is less than 60 mole %, necessary cohesive force is lost and an adhesive residue is easily generated in some cases.

Furthermore, it is preferable to contain a propylene/olefin copolymer having tacticity (PX) and polypropylene having the same tacticity (PY).

Examples of the tactic polypropylene (PY) include syndiotactic polypropylene and isotactic polypropylene, either of which can suitably be used since they exhibit crystallinity. Furthermore, it is more preferable when the tacticity of the propylene chain in the propylene/olefin copolymer (PX) and the tacticity of polypropylene (PY) are of the same kind (that is, a syndiotactic structure or an isotactic structure), the alloy structure of the composition becomes easy to form a miscible structure that is finer than 0.1 $\mu$, both advantages of adhesive properties of the propylene/olefin copolymer (PX) and heat resistance of polypropylene (PY) can be maximized, and further, transparency can also be exhibited.

Tacticity of the propylene/olefin copolymer (PX) or polypropylene (PY) is determined by using a $^{13}$C-NMR measurement as described, for example, in Japanese Patent Application Laid-Open No. 1995-48417 or Japanese Patent Application Laid-Open No. 2003-48286. The syndiotacticity or isotacticity is a tacticity viewed from a triad chain of a propylene chain. It is usually not less than 0.6 and preferably not less than 0.7, within which the rate of crystallization is high, and film-forming processability is excellent. The polymerization methods of the olefinic polymer showing tacticity are described, for example, in Japanese Patent Application Laid-Open No. 1996-301934, Japanese Patent Application Laid-Open No. 1997-12635, Japanese Patent Application Laid-Open No. 2003-48286 and the like. However, all known methods can be employed.

The weight ratio {(PX)/(PY)} of the propylene/olefin copolymer (PX) and polypropylene (PY) is preferably in the range of 99/1 to 40/60, more preferably in the range of 97/3 to 50/50 and further preferably in the range of 95/5 to 60/40. When the weight ratio {(PX)/(PY)} is greater than 99/1, heat resistance of polypropylene is not exhibited in some cases. On the other hand, when the weight ratio {(PX)/(PY)} is smaller than 40/60, necessary adhesion is lost in some cases.

The adhesive material of the present invention usually contains the olefinic polymer of not less than 40 weight %, preferably not less than 60 weight % and more preferably not less than 80 weight %.

The melting temperature Tm and the heat of fusion $\Delta$H of the adhesive material are obtained by the measurement according to a differential scanning calorimetry test. The melting temperature Tm is a temperature of the endothermic peak considered to be based on melting of a crystal. The heat of fusion $\Delta$H is obtained from the endothermic peak existing in the range of 80°C to 180°C, which is at least 1 J/g, preferably at least 2 J/g and more preferably at least 4 J/g. The adhesive material of the present invention becomes an adhesive material having heat resistance by selecting the kinds thereof being capable of satisfying the melting temperature Tm (°C) and the heat of fusion $\Delta$H of the aforementioned endothermic peak.

When the melting temperature Tm is less than 80°C, heating treatment at not less than 80°C or transport/storage for a long period of time might cause increase in adhesion or a trouble such as an adhesive residue. On the other hand, when the melting temperature Tm is higher than 180°C, a special device for heating/attaching at more than 100°C might be needed, and in case of the olefinic polymer, properties as an adhesive material might not be achieved.

The storage elastic modulus G' and the loss coefficient tan $\delta$ of the adhesive material according to the present invention are measured by a viscoelasticity test. The storage elastic modulus G' in a temperature range of 20°C to 80°C is preferably in the range of 0.1 to 50 MPa, more preferably from 0.5 to 30 MPa and further preferably from 1 to 20 MPa.

The temperature range in which the adhesive material of the present invention is used for various applications is usually from 20°C to 80°C. When the storage elastic modulus G' is less than 0.1 MPa in this temperature range, an adhesive residue after repeeling might easily be generated on an adherend in some cases. Further, in the temperature range of 20°C to 80°C, when the storage elastic modulus G' exceeds 50 MPa, tight adhesion to an adherend is not fully obtained in some cases.

The loss coefficient tan $\delta$ of the adhesive material of the present invention is preferably at least 0.05 in the temperature range of 20°C to 80°C and more preferable lower limit is 0.1. If the loss coefficient tan $\delta$ is not less than 0.05, when heating and cooling are repeatedly carried out, the adhesive material is strong against a stress generated from a difference between expansion of the adherend and the adhesive material or a stress such as an unexpected impact or the like. For this reason, the adhesive material of the present invention achieves high reliability in various uses in the fields of electronic/semiconductor materials, optical/display materials and the like where demands for performances and qualities are strict. The maximum tan $\delta$ of the adhesive material of the present invention is generally in the range of 0.5 to 2.

Meanwhile, when the loss coefficient tan $\delta$ is less than 0.05, in case of an adherend which is highly sensitive to a stress such as an electronic device, an organic electroluminescent (EL) device or the like, peeling or a trouble in the adherend and the like might occur due to a difference in the expansion coefficient of the adherend and the adhesive material, a stress or an impact caused by warpage, or the like, in some cases.

The peak of the loss coefficient tan $\delta$ of the adhesive material of the present invention is preferably in the range of -20°C to +10°C from the viewpoint of enhancing the adhesive property or repeeling property at around room temperature. When the peak of the loss coefficient tan $\delta$ is lower than -20°C, in case of repeeling at around room temperature, the peeling property might be worsened. Further, when the peak of the loss coefficient tan $\delta$ is higher than +10°C, in case of attaching at around room temperature, a failure in adhesion might occur.

Incidentally, the storage elastic modulus G' and the loss coefficient tan $\delta$ are calculated by the viscoelasticity tests in conformity with "Plastics - Determination of dynamic mechanical properties", specified in JIS-K7244, where the storage elastic modulus G' and loss elastic modulus G" are measured, then the loss coefficient tan $\delta$ is calculated by substituting the storage elastic modulus G' and the loss elastic modulus G" into a relational expression: tan $\delta$ = G" / G'.

The adhesive material of the present invention can also contain components such as a thermoplastic elastomer, a cooligomer of ethylene and other $\alpha$-olefin, a synthetic resin or the like, to such an extent that the object of the present invention is not damaged. With these components, for example, a softening temperature can be adjusted with respect to an adhering temperature, and an adhesive aptitude in the use environment temperature (near 20°C to 80°C) can be adjusted.

Examples of the thermoplastic elastomer include a polystyrene type elastomer, a polyolefin type elastomer, a polyamide type elastomer, a polyurethane type elastomer, a polyester type elastomer and the like. Of these compounds, in order to improve flexibility or adhesive properties while maintaining the moisture content and ion content at a low level, a polystyrene type elastomer and a polyolefin type elastomer are preferable.

Examples of the polystyrene type elastomer include a styrene-isoprene-styrene block copolymer (SIS), a styrene-ethylene/butylene-styrene block copolymer (SEBS), a styrene-ethylene/propylene-styrene block copolymer (SEPS), other styrene/diene type block copolymers, hydrogenated polymers thereof or the like. Concrete examples of SIS include a commercial product available under the registered trade name JSR SIS from JSR Corporation, a commercial product available under the registered trade name Claytone D from Shell Chemicals Japan Ltd. and the like. Further, concrete examples of SEPS include a commercial product available under the registered trade name Septone from Kuraray Co., Ltd. and the like.

As the polyolefin type elastomer, a block copolymer of a polyolefin block forming a highly crystalline polymer such as polypropylene to be a hard part and a copolymer block being amorphous to be a soft part can be cited. Concrete examples thereof include an olefin (crystalline)/ethylene/butylene/olefin (crystalline) block copolymer, a polypropylene/polyethyleneoxide/polypropylene block copolymer, a polypropylene/polyolefin (non-crystalline)/polypropylene block copolymer and the like. Concrete examples thereof include a commercial product available under the registered trade name DYNARON from JSR Corporation.

The cooligomer of ethylene and $\alpha$-olefin is usually a liquid type at room temperature. Examples of $\alpha$-olefin include $\alpha$-olefins having 3 to 20 carbon atoms such as propylene, 1-butene, 1-pentene, 1-hexene, 1-octene, 1-decene, 1-dodecene, 1-tetradecene, 1-hexadecene, 1-octadecene, 4-methyl-1-pentene and the like. Among these, $\alpha$-olefins having 3 to 14 carbon atoms are preferable. Concrete examples thereof include a commercial product available under the registered trade name LUCANT from Mitsui Chemicals, Inc.

Further, the synthetic resin is preferably a non-halogenated resin. Concrete examples thereof include polyether, polyamide, polyurethane, polyester, polycarbonate and the like.

The adhesive material of the present invention may further contain various minor components to such an extent that the object of the present invention is not damaged. For example, a plasticizer such as a liquid butyl rubber, a tackifier such as polyterpene and the like may be contained.

Further, the adhesive material of the present invention may contain various additives which are generally blended in with an olefinic polymer. For example, various UV absorbers, antioxidants, heat-resistant stabilizers and the like may be contained.

It is preferable to select the type of the additives to be used for the adhesive material of the present invention and minimize the amount thereof lest it exert bad influences in various uses in the fields of electronic/semiconductor materials, optical/display materials and the like.

It is preferable that minor components or additives are contained in the sea comprising the olefinic polymer, because stability of the olefinic polymer against not only heat and light but also chemicals can be exhibited. The content thereof is preferably not more than 40 weight % and more preferably not more than 20 weight %, based on the adhesive material.

A method for producing an adhesive material is not particularly limited and exemplified by a method in which crystalline olefinic polymer and an olefinic polymer which is excellent in adhesion in its structure are mixed by using a ribbon blender, a V blender, a Henschel mixer, a super mixer, a tumbler mixer or the like, and melt-kneaded by using a single-screw extruder, a double-screw extruder, a kneader, a bunbary mixer or the like, melt-stranded, cooled, then cut and molded in the shape of pellets, or a method in which the melt-kneaded product is cooled and pulverized.

The adhesive film according to the present invention will now be illustrated in more detail with reference to the accompanying drawings. Incidentally, in all of the drawings, the same or corresponding parts are expressed by the same symbols.

The adhesive film 10 of the present invention is an adhesive film 10 in which an adhesive material layer 2 comprising the adhesive material of the present invention is laminated on at least one surface of a base material layer 1.

Further, the adhesive film 10 of the present invention may contain various additives which are generally blended in this type of a film. For example, various UV absorbers, antioxidants, heat-resistant stabilizers and the like may be contained.

It is preferable that the type of minor components or additives to be used for the adhesive material layer 2 of the present invention is selected and the amount thereof is minimized so as not to increase the ion content which exerts bad influences in various uses in the fields of electronic/semiconductor materials, optical/display materials and the like.

The thickness of the adhesive material layer 2 is not particularly limited. The thickness is usually from about 0.001 to 2 mm and preferably from about 0.005 to 1 mm in consideration of adhesive strength, tight adhesion to the surface unevenness of an adherend and the like required depending on the intended use.

The base material layer 1 is not particularly limited, and various thinned products can be used. Examples of the constituent component include synthetic resins such as a polyolefin type resin, a polyester type resin, a polyamide type resin and the like, and metals such as copper, aluminum, SUS and the like, a natural resin, paper and the like, which can be used singly or in combination thereof.

The constituent component of the base material layer 1 preferably comprises particularly an olefinic polymer as a main component from the viewpoint that the olefinic polymer combines the strength for fixing and maintaining an adherend and softness responsive to the shape of an adherend, it is inexpensive and excellent in energy-saving, it is excellent in stability against chemicals such as an acid, an alkali or the like, it is easily imparted functions by being compounded with other materials, its load to the environment is low, it does not substantially contain any corrosive ion or metal ion, and it easily forms strong adhesion with an adhesive material layer. Incidentally, a main component in the present invention refers to a constituent component which is contained in a relatively highest ratio among the constituent components.

Concrete examples of the olefinic polymer include low density polyethylene, linear low density polyethylene, medium density polyethylene, high density polyethylene and an ethylene type polymer such as a copolymer comprising ethylene as a main component and a vinyl compound of various kinds selected from $\alpha$-olefin having 3 to 12 carbon atoms, styrene, vinyl acetate, (meth)acrylic acid, (meth)acrylate, ionomer and the like as a minor component, which may be a random copolymer or a block copolymer. Examples of the olefinic polymer also include a propylene homopolymer and a propylene type polymer such as a copolymer comprising propylene as a major component and ethylene or an $\alpha$-olefin having 4 to 12 carbon atoms as a minor component, which may be a random copolymer or a block copolymer. $\alpha$-olefinic polymers having 4 or more carbon atoms such as butene, 4-methylpentene and the like can also be mentioned. Further, a propylene/$\alpha$-olefin copolymer having tacticity of syndiotacticity or isotacticity (PX) and polypropylene having tacticity (PY), which have been cited as preferable examples of the adhesive material, may also be mentioned.

The content of the olefinic polymer in the base material layer 1 is usually from about 40 to 100 weight % and preferably from about 60 to 100 weight %. Concrete examples of the ethylene/$\alpha$-olefin copolymer as one example of the olefinic polymers which improves flexibility and stretchability include commercial products available under the registered trade names Tafmer A, Tafmer P and the like from Mitsui Chemicals, Inc. Concrete examples of the propylene/$\alpha$-olefin copolymer include commercial products available under the trade names Tafmer XR, Tafmer S and the like from Mitsui Chemicals, Inc. Concrete examples of the polybutene include a commercial product available under the registered trade name Beaulon from Mitsui Chemicals, Inc.

In addition to the olefinic polymer, to improve properties such as mechanical properties, heat resistance, flexibility and the like, a synthetic resin or a thermoplastic elastomer can properly be added if necessary as a constituent component of the base material layer 1, in such a range that performance and qualities of the adhesive film 10 are not deteriorated. Examples of the synthetic resin for improving mechanical properties and heat resistance include, for example, a polyamide resin such as nylon-6, nylon-6,6, nylon-6,10, nylon-6,12 and the like; a polyester resin such as polyethylene terephthalate, polybutylene terephthalate, copolymers thereof, polyethylene naphthalate, aliphatic polyester and the like; a polycarbonate resin, a polystyrene resin, a polyphenylene sulfide resin, polyimide and the like. Examples of the thermoplastic elastomer for improving flexibility include a polystyrene type elastomer, a polyamide type elastomer, a polyurethane type elastomer, a polyester type elastomer and the like.

The base material layer 1 may contain various additives generally used in a base material layer 1 in this kind of adhesive film 10. For example, various kinds of additives such as fillers, pigments, dyes, UV absorbers, antioxidants, heat stabilizers, lubricants, weatherability stabilizers, plasticizers, crystallization nucleating agents and the like may be contained in such a range that performance and qualities of the adhesive film 10 are not adversely affected.

The thickness of the base material layer 1 is not particularly limited, and is usually from about 0.01 to 3 mm in consideration of cutting processability, mechanical strength, flexibility and the like which are required depending on the intended use, and preferably from about 0.02 to 2 mm in respect of prevention of scratch, operability in attachment and price.

Young's modulus of the base material layer 1 (measurement temperature: 23°C) is not particularly limited, and is usually from about 20 to 4000 MPa, and preferably from about 50 to 1500 MPa in consideration of mechanical strength, flexibility and the like which are required depending on the intended use.

When the base material layer 1 consists of plural layers of two or more, the base material layer 1 can be constituted so that each layer is allocated each of the various properties required as the adhesive film 10.

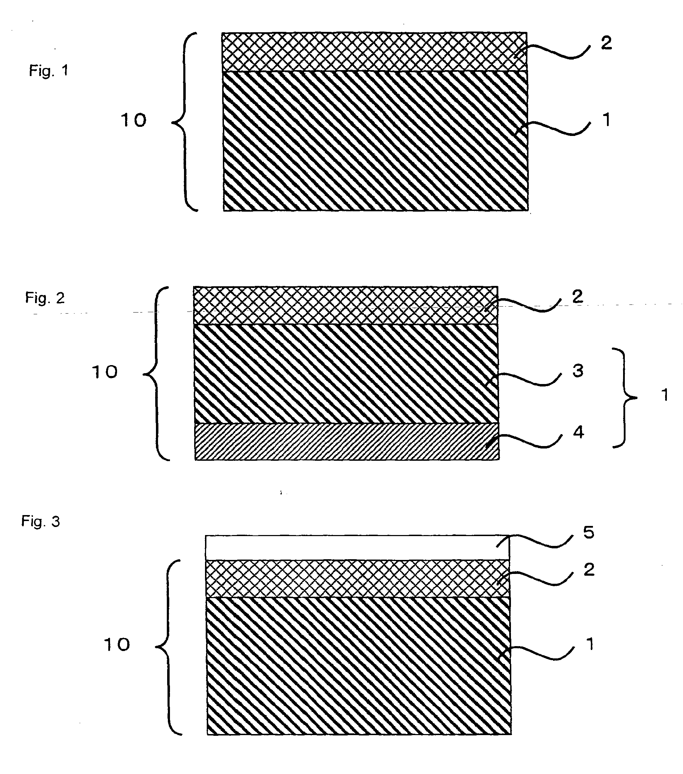

Fig. 2 is a cross-sectional view illustrating another embodiment of the adhesive film 10 according to the present invention. As shown in the same drawing, the adhesive film 10 of the present invention comprises the base material layer 1 comprising the intermediate layer 3 and the outer layer 4, and the adhesive material layer 2 which is laminated on one surface of the intermediate layer 3.

For example, the intermediate layer 3 is provided with functions such as stretchability, resistance to tearing, cutting processability, perceptibility to coloration and the like, while the outer layer 4 is provided with resistance to surface scratch or the peeling property against the adhesive material layer 2 for easy rewinding of the wound adhesive film 10.

Constituent components of the intermediate layer 3 may preferably have an olefinic polymer as a main component. Examples of the olefinic polymer include those as described above.

Furthermore, preferable examples of main components of the outer layer 4 include low density polyethylene, very low density polyethylene, linear low density polyethylene, medium density polyethylene, high density polyethylene and an ethylene type polymer such as a copolymer comprising ethylene and a vinyl compound of various kinds such as an $\alpha$-olefin having 3 to 12 carbon atoms, styrene, vinyl acetate, (meth)acrylic acid, (meth)acrylate, ionomer and the like. Further, when employing a polymer containing an $\alpha$-olefin as a main component, in addition to these compounds, a peeling material such as a reactant of a small amount of polyvinyl alcohol or an ethylene/vinyl alcohol copolymer with long-chain alkyl isocyanate or the like is preferably mixed in an amount of from 1 to 10 weight % as well. In this way, the adhesive film 10 with a rewinding force of not more than 2 N/25 mm can be obtained even when a peeling film is not provided.

When the base material layer 1 comprises the intermediate layer 3 and the outer layer 4, the thickness of the intermediate layer 3 and the outer layer 4 is not particularly limited. The thickness of the intermediate layer 3 is preferably from about 0.01 to 3 mm and particularly preferably from about 0.02 to 2 mm, while the thickness of the outer layer 4 is preferably from about 0.001 to 1 mm and particularly preferably from about 0.005 to 0.5 mm.

When the base material layer is composed of plural layers as shown in Fig. 2, Young's modulus of the base material layer 1, i.e. the plural layers being viewed as a single layer, is usually from about 20 to 4000 MPa and preferably from about 50 to 2000 MPa.

The adhesive film 10 of the present invention can be made into a film with excellent transparency. The adhesive film with excellent transparency refers to those having the visible light transmission rate of preferably not less than 70%, more preferably not less than 80%, and further preferably not less than 90%. To evaluate the visible light transmission rate, JIS R3106 standards can be adopted.

Furthermore, the adhesive film 10 of the present invention may also contain known dyes for adjusting the color tone, more specifically, visible ray absorbent dyes for a particular wavelength, fluorescent dyes or phosphorescent dyes.

Furthermore, when an adhesive film is used in the fields of electronic/semiconductor materials, optical/display materials and the like, it is required that the amount of ion components such as a cation, an anion, a metal ion and the like contained in the adhesive film adjacent to an adherend in the relevant fields are small and such properties are indicated as the ion content.

The ion content in the present invention refers to the total content of various ions extracted by pure water, and is preferably less than 1 ppm and more preferably not more than 0.5 ppm. The total ion content being less than 1 ppm can be considered as that an adhesive film contains substantially no reactive material represented by ions.

On the other hand, when the total ion content is not less than 1 ppm, for example, an adherend which is very sensitive to ions such as a semiconductor device, an organic EL device or the like may easily be affected by ions and defects may be caused. The ions are extracted from the adhesive film 10 in pure water. Concrete examples thereof include a cation such as sodium ion ($Na^+$), potassium ion ($K^+$) and the like; an anion such as chloride ion (Cl-), fluoride ion (F-), nitrate ion (NO3-), nitrite ion ($NO_2^-$), phosphate ion ($PO_4^{3-}$), sulfate ion ($SO_4^{2-}$) and the like; and a metal ion such as ferric ion ($Fe^{2+}$), copper ion ($Cu^{2+}$), chrome ion ($Cr^{3+}$), aluminum ion ($Al^{3+}$), zinc ion ($Zn^{2+}$), nickel ion ($Ni^{2+}$) and the like.

By employing an olefinic polymer for the adhesive material layer 2 and the base material layer 1 of the present invention, and selecting a structure in which interaction with water or an ion is small, the adhesive film 10 with the ion content at a low level can be produced.

The visible light transmission rate of the present invention can easily be measured by a spectrophotometer equipped with a dual-beam integrating sphere. As the spectrophotometer, for example, U-3400 (a product of Hitachi Ltd.) or UV-3100 (a product of Shimadzu Corporation) can be used.

In the adhesive film 10 of the present invention, the peeling film 5 is preferably laminated on a side of the adhesive material layer for making rewinding of the adhesive film 10 easy, improving the smoothness of a surface of the adhesive material layer and for enhancing punching processability. Furthermore, in the case where a punching process is also carried out or the adhesive material layers are required on both surfaces, a peeling film is usually used in order to protect the adhesive material layer.

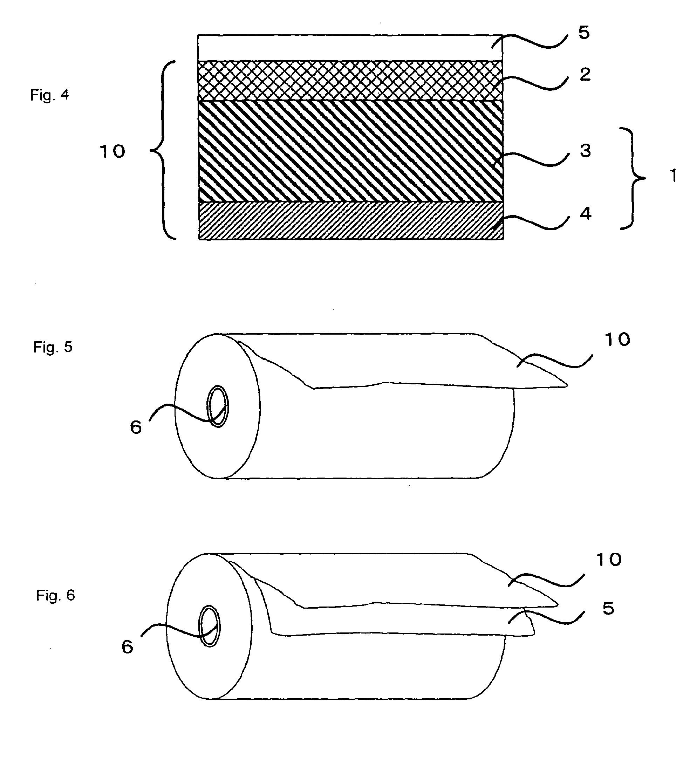

As shown in Figs. 3 and 4, the peeling film 5 laminated on one side of the adhesive material layer 2 is formed from various conventionally known constituent components. The constituent components of the peeling film 5 are not particularly limited, but are preferably synthetic resin, processed paper or the like which do not generate toxic gas such as halogen compounds or the like when incinerated. Of these components, for example, a polyester film or processed paper in which a synthetic resin such as polyethylene is coated on the surface of paper is preferable from the viewpoint of rigidity for preventing deformation of the adhesive film 10 so as to be punched with high accuracy, thickness and flexibility being not problematic when the film is rolled, and the amount of waste material being reduced. The synthetic resin used in the peeling film 5 may contain various fillers, for example, pigments, UV absorbers, antioxidants, heat stabilizers, lubricants or the like to such an extent that the adhesive film 10 is not adversely affected.

A release layer may be formed on the surface of the peeling film 5 adjacent to the adhesive film 10. In this release layer, various release agents generally used in a release layer of this kind of the peeling film 5 are used. For example, long-chain alkyl type release agents such as a long-chain alkyl acrylate copolymer, a long-chain alkyl vinyl ester copolymer, a long-chain alkyl vinyl ether copolymer and the like, silicone-based release agents and fluorine-based release agents can be mentioned. Further, since the unevenness of the peeling film is transferred onto the surface of the adhesive material layer, the surface roughness Ra can suitably be selected in the range of about 10 to 0.1 $\mu$m depending on the intended uses. The thickness of the peeling film 5 is preferably as thin as possible from the viewpoint of preventing troubles when the film is rolled and reducing the amount of waste material, for example, from about 0.005 to 0.3 mm and preferably from about 0.01 to 0.2 mm. Concrete examples of the peeling film consisting of polyethylene terephthalate (PET) include a commercial product available under the registered trade name Tohcello peeling film SP from Tohcello Co., Ltd. Also, concrete examples of the peeling film consisting of processed paper include a commercial product available under the trade name Separate from Oji Paper Co., Ltd.

To produce the adhesive film 10, a method of laminating the adhesive material layer on one surface of the base material layer 1 is not particularly limited, and the adhesive film can be produced by a method such as: a method in which a previously formed base material film (base material layer) made of an olefinic polymer is subjected to a surface treatment such as a corona treatment or the like, then a material for comprising an adhesive material layer is applied thereon and dried; a method in which an adhesive is applied on an peeling film and dried, then the peeling film is pressure-bonded with a previously formed base material film (base material layer) made of an olefinic polymer; a method of co-extrusion in which an adhesive material layer and a base material layer are simultaneously subjected to integral molding; a method in which an adhesive is laminated by melt-extrusion onto a previously formed base material layer; or the like. Of these production methods, the co-extrusion method, a method of producing a laminate film having a multi-layer structure and a predetermined thickness by melt-heating the materials constituting the base material layer and the adhesive material layer respectively and subsequently performing co-extrusion-molding thereof, is preferable in respect of high efficiency and energy saving, thereby producing the laminate film inexpensively. In the co-extrusion method using a multi-layer die having two or more layers, the adhesive film 10 having one or more layers of base material layer and adhesive material layer can be simultaneously formed. Examples of the co-extrusion method using a multi-layer die include: a method which comprises combining the melts of the respective layers in a layered form in advance, then feeding the integrated body to a flat die, and bonding it in the die (feed block method); a method which comprises delivering melts of the respective layers into separate manifolds in a flat die, bonding the respective layers in a layered form in a common place (generally at the front of a die lip) in the die, then feeding the integrated body to the flat die and bonding it in the die (multi-manifold method); a method in which the feed block method and the multi-manifold method are combined together; and the like.

The method of laminating the thus-obtained adhesive film 10 on the peeling film 5 is not particularly limited, and, for example, a usual film laminating device can be used for lamination.

As shown in Fig. 5, the adhesive film 10 of the present invention can be wound around the core material 6 and stored in a rolled state, and can be used by unwinding a necessary amount of the adhesive film.

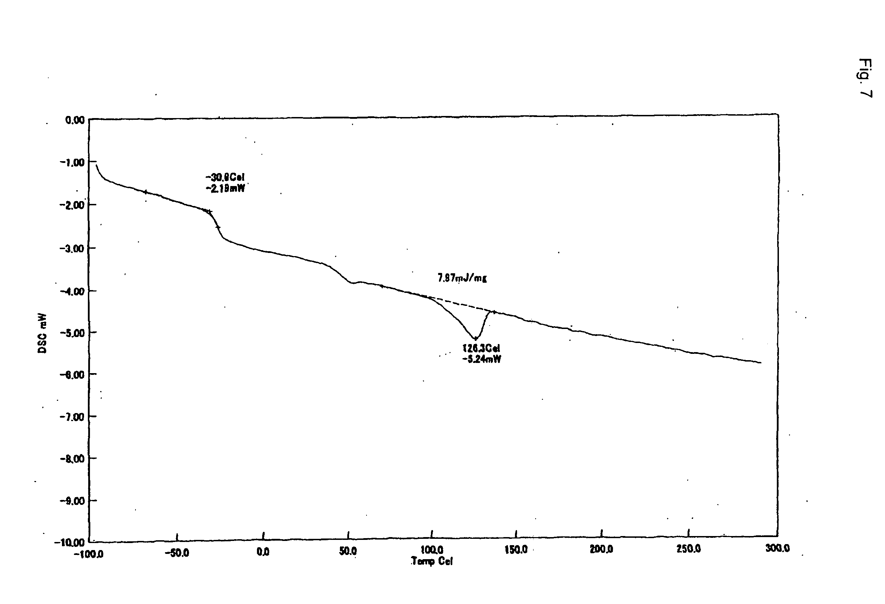

Further, as shown in Fig. 6, the peeling film 5 can be attached to the side of the adhesive material layer of the adhesive film 10 of the present invention, then the adhesive film 10 is wound around the core material 6 and stored in a rolled state, and can be used by unwinding a necessary amount of the adhesive film while releasing the peeling film 5.

Further, the adhesive film 10 of the present invention can be cut off in the most suitable shape for the intended use. The shape is not particularly limited, and may be circular, square or rectangular, and for example, the adhesive film 10 may be punched off in a desired shape, leaving a part thereof unpunched, on the peeling film 5.

The adhesive film 10 of the present invention can be punched off in the most suitable shape (for example, a circle) for the intended use and maintained on the peeling film 5, wound around the core material 6 and stored in a rolled state, and can be used by unwinding a necessary amount of the adhesive film while releasing the peeling film 5.

The adhesive film 10 according to the present invention is used in a wide variety of conventionally known applications as an adhesive film. Applications of the adhesive film are not particularly limited. However, the adhesive film 10 according to the present invention is particularly suitable for surface protection uses, treatment uses with a chemical solution, heating treatment uses, grinding/polishing uses, cutting processing uses and transport storage uses in the fields of electronic/semiconductor materials, optical/display materials and the like wherein high performance and qualities are demanded, and also suitable for an application, or in combination of two or more kinds, selected from the aforementioned applications. Hereinafter, these applications are described.

For surface protection uses, for example, in order to prevent scratch on an adherend such as a metal plate, a resin plate, glass, a ceramic plate or the like, or to prevent attachment of a contaminant thereon, an adhesive film is attached to a surface of the adherend. In particular, as performance of an adhesive film required in the fields of electronic/semiconductor materials, optical/display materials and the like, it is required that no floating or peeling of an adhesive film occurs after being attached to the adherend with various surface conditions, the adhesive film can be peeled away with a force as small as possible, and no adhesive residue on the adherend is left. In particular, in the fields of electronic/semiconductor materials, optical/display materials and the like, it is required that contamination be reduced to the limit for electronic members, semiconductor wafers, glass wafers, ceramic wafers, optical lens members and the like.

For treatment uses with a chemical solution, for example, in a plating treatment or etching treatment in the fields of electronic/semiconductor materials, an adhesive film is attached to a surface of the material to be protected. For an adhesive film, performances such as stability against chemicals, e.g. a plating solution, an etching solution or the like are necessary, and also required are that no floating or peeling of an adhesive film after being attached to an adherend occurs and the adhesive film is easily peeled away after treatment with a chemical solution, and in particular, no washing of the adherend is needed and no deterioration thereof is caused.

For heating treatment uses, for example, when producing optical lenses having a lens function made of an acrylic resin in the fields of optical/display materials, an adhesive film is used by attaching to a surface of the lens to be protected. For an adhesive film, performances such as stability against heating treatment at about 80°C to 100°C are necessary, and also required are that no floating or peeling of an adhesive film after being attached to an adherend occurs and the adhesive film is easily peeled away after heating treatment, and in particular, no contamination on the adherend occurs and no deterioration of the adherend is caused.

For grinding/polishing uses, for example, when grinding/polishing a back surface of a semiconductor wafer or a glass lens for thinning, an adhesive film is attached between an adherend and a rotation fixing jig of a grinding machine. In this case, qualities such as adhesive properties for tightly attaching the adherend to the rotation fixing jig, cushion properties, smoothness and the like are required for an adhesive film. Furthermore, it is required that peeling at the time of peeling is easy and no washing is needed since substantially no adhesive residue is left on the adherend.

For cutting processing uses, for example, at the time of cutting semiconductor, glass and ceramic wafer into small pieces, an adhesive film is used by attaching to an adherend, i.e., a wafer. In this case, a property of generating no defect or crack in the adherend is required for an adhesive film. Furthermore, it is required that peeling at the time of peeling is easy and no washing is needed since substantially no adhesive residue is left on the adherend. In such cutting processing, a method of cutting by using a rotating blade made of a metal or diamond, a laser, a water jet or the like is generally used. In case of laser processing, in particular, an adhesive film is required to be substantially transparent to laser light.

For transport storage uses, after an adhesive film is used for the surface protection uses, treatment uses with a chemical solution, heating treatment uses, grinding/polishing uses or cutting processing uses, an adherend and the adhesive film are transported by a ship, truck or the like, or stored at a warehouse for a long time as the adhesive film is attached to the adherend, then come into use. In particular, it is required that the performance and quality of the adherend do not change even under an environment in which temperature or humidity is not particularly managed.

In the fields of electronic/semiconductor materials, optical/display materials and the like where demands for performances and qualities are strict, a method of using one or a combination of two or more applications selected from surface protection uses, transport or storage uses, treatment uses with a chemical solution, heating treatment uses, grinding or polishing processing uses and cutting processing uses is preferably used because advantages of the adhesive film 10 of the present invention can further be exhibited.

As an example of use in which four kinds of applications, i.e., surface protection uses, transport or storage uses, heating treatment uses and cutting processing uses are combined, a method of use for producing and processing an optical lens member for a display can be cited. In this case, an adhesive film is attached to a lens right after the lens is formed, which undergoes a thermal treatment process (about 80°C to 120°C) of a lens, a cutting process by a $CO_2$ laser and an inspecting process, piled up for storage, then transported in a container by a car or a boat, thereafter the optical lens members are assembled into a display, where the adhesive film falls into disuse and is peeled away.

Furthermore, as an example of use in which three kinds of applications, i.e. grinding or polishing processing uses, surface protection uses and transport or storage uses are combined, a method of use for processing a glass lens can be cited. In this case, an adhesive film is attached to a glass lens, which is ground or polished according to the degree to which the glass lens is corrected, transported and stored as is, then at a store the adhesive film falls into disuse and is peeled away.

Further, as an example of use in which two kinds of applications, i.e., cutting processing uses and treatment uses with a chemical solution, a method of use for processing a wafer can be cited. In this case, an adhesive film is attached to a wafer, and then the wafer is cut into small pieces by a dicer, the side of which is treated with an etching solution such as a hydrofluoric acid or the like, then the adhesive film falls into disuse after the small pieces are peeled away from the adhesive film by a die bonder.

EXAMPLES

The present invention is now more specifically illustrated with reference to Examples. However, the present invention is not limited to these Examples.

In the following Examples and Comparative Examples, differential scanning calorimetry, viscoelasticity, ion content, adhesion, adhesive stability under heat and pressure, and chemical resistance were measured and evaluated according to the following methods.

(Formation of Adhesive Material)

A material constituting an adhesive layer was mixed by using a Henschel mixer, and then kneaded by using a double-screw screw extruder equipped with a strand die. The kneaded product was melt-extruded (die temperature: 200°C) into the form of a strand and cooled, then cut and molded into the form of a pellet.

(Measurement of Differential Scanning Calorimetry)

The melting temperature Tm and the heat of fusion $\Delta H$ of an adhesive material were measured by a differential scanning calorimetry measurement in conformity with "Testing methods for heat of transitions of plastics", JIS-K7122. Specifically, a differential scanning calorimetry (DSC) measurement for the adhesive material was performed by using an RDC220 manufactured by Seiko Instruments Inc. The DSC was measured over a temperature range of -100 to 300°C under the test condition where a temperature was lowered from 30°C to -100°C, maintained at -100°C for 10 minutes, and then elevated at a rate of 10°C/min. From the temperature-heat capacity curve thus obtained by the measurement, where the melting temperature Tm was determined as the peak value (°C), the heat of fusion $\Delta H$ (mJ/mg = J/g) was measured.

(Measurement of Viscoelastic Modulus)

The viscoelastic modulus of an adhesive material was measured according to a viscoelasticity test method in conformity with "Plastics - Determination of dynamic mechanical properties", JIS-K7244. Namely, the viscoelastic modulus was measured by a mechanical spectrometer RMS-800 manufactured by Rheometric-Scientific Inc., using 8-mm diameter parallel plates with a gap between the plates of 1.5 mm. By using a circular plate of 8 mm $\Phi$ x 1.5 mm (thickness) as a sample piece, a storage elastic modulus G' (Pa) and loss elastic modulus G" (Pa) over a temperature range of -50°C to 150°C, where a frequency w = 100 rad/sec, and a temperature elevation rate is 3°C/min, was measured. The loss coefficient tan $\delta$ was calculated by substituting the measured storage elastic modulus G' and loss elastic modulus G" into a relational expression, i.e., tan $\delta$ = G"/G'.

(Measurement of Ion Content)

According to the following method, various ions extracted from an adhesive film were analyzed. Firstly, 5 g of a sample piece of about 2.5 square-cm cut from the adhesive film and 150 g of pure water were put into a 200-ml Teflon (registered trademark) vessel, extracted at 100°C for 60 minutes using an autoclave, then the sample piece was taken out from the vessel and the extract was concentrated to 25 g on a hot plate. Using the concentrated solution, cations such as $Na^+$, $K^+$ and the like and anions such as $Cl^-$, $F^-$, $NO_3^-$, $NO_2^-$, $PO_4^{3-}$, $SO_4^{2-}$ and the like were quantitatively analyzed by an ion chromatography analysis. Further, metal ions such as $Fe^{2+}$, $Cu^{2+}$, $Cr^{3+}$, $Al^{3+}$, $Zn^{2+}$, $Ni^{2+}$ and the like were quantitatively analyzed by an atomic absorption analysis. The ion content (ppm) of each ion species was calculated by substituting the quantitative analysis value ($\mu$g) into the following equation.

$$\text{Ion Content (ppm) = Quantitative Analysis Value (μg) ÷ Sample Piece Weight}$$

$$\text{(g) x (25 g ÷ 150 g)}$$

The total ion content (ppm) was calculated from the ion content (ppm) of the respective ion species. By concentrating, the detection limit of the ion analytical value becomes 0.01 ppm.

(Measurement of Adhesion)

Adhesion of an adhesive film was measured in conformity with "Testing methods of pressure-sensitive adhesive films" (JIS Z0237-2000). A SUS-BA plate of 50 mm (width) x 150 mm (length) x 2 mm (thickness) as a test plate and an adhesive film were allowed to stand in an environment at a temperature of 23°C and a relative humidity of 50% for 1 hour. Then, the adhesive film was attached to the test plate with a pressure applied by two rounds of running a rubber roll of about 2 kg in a back-and-forth manner. After attachment, the SUS-BA plate with the adhesive film was allowed to stand in a constant environment at a temperature of 23°C and a relative humidity of 50% for 30 minutes, then a peel adhesion was measured by peeling the adhesive film in a direction of 180° at a rate of 300 mm/min from the SUS-BA plate at a temperature of 23°C and a relative humidity of 50%. The adhesion (23°C) shown in the Examples below is the average of at least two measurements, and the unit is N/25 mm.

(Evaluation of Adhesive Stability under Heat and Pressure)

A sample piece was attached to a SUS-BA plate at 23°C, allowed to stand for 30 minutes, and then the initial adhesion (unit: N/25 mm) was measured. Next, the sample was placed in heated and pressurized environment at 80°C and 0.2 MPa for 7 days, then the adhesion (unit: N/25 mm) was measured.
In conformity with the adhesion measurement method described in JIS Z0237-2000, adhesion was measured while peeling the sample piece in a direction of 180° at a rate of 300 mm/min from the SUS-BA plate, and then adhesive stability under heating and pressurizing was evaluated according to the following criteria.
When the value represented by (Adhesion after being left for 7 days under heating at 80°C and pressurizing at 0.2 MPa)/(Initial adhesion at 23°C) is in the range of 0.7 to 1.5 and no contamination on an adherend surface was visually observed, the sample piece was regarded as passing the examination (indicated by O), and when the value represented by (Adhesion after being left for 7 days under heating at 80°C and pressurizing at 0.2 MPa)/(Initial adhesion at 23°C) was less than 0.7 or more than 1.5 or a contaminant was observed on an adherend surface, the sample piece was regarded as not passing the examination (indicated by X).

(Evaluation of Chemical Resistance)

Chemical resistance of an adhesive film was tested in conformity with a method described in "Plastics - Methods of test for the determination of the effects of immersion in liquid chemicals", JIS K7114-2001. The measure, weight and appearance of a sample piece (60 square-mm) were measured 7 days after the sample piece was immersed in liquid chemicals of 2 normal hydrochloric acid (23°C and 70°), 2 normal sulfuric acid (23°C and 70°), an aqueous 20 weight % sodium hydroxide solution (20 wt% NaOHaq) (23°C and 70°), a 10 weight % ammonia solution (10 wt% NH3aq) (23°C), isopropanol (23°C), acetone (23°C) and ethyl acetate (23°C). By comparing the resulting measure, weight and appearance of the sample with those before immersion, chemical resistance was evaluated according to the following criteria.
The adhesive film with changes in both the measure and weight of less than 1% and no observed change in appearance was regarded as passing the examination (indicated by O), and the adhesive film with any of the change in the measure of not less than 1%, change in the weight of not less than 1%, or change in appearance observed was regarded as not passing the examination (indicated by X).

Example 1

As a material for each layer constituting the adhesive film 10, the following materials were used. That is, as a component constituting the base material layer 1, 88 weight parts of a propylene/ethylene/1-butene random copolymer (rPP; ethylene component: 5 mole %, 1-butene component: 5 mole %, density: 0.91 g/cm$^3$, MFR (measured at a temperature of 230°C with a load of 2.16 kg in conformity with JIS K7210-1999, hereinafter the same shall apply): 7.2 g/10 min), 10 weight parts of an ethylene/1-butene copolymer (EB-A; density: 0.88 g/cm$^3$, MFR (at a temperature of 190°C with a load of 2.16 kg): 3.6 g/10 min) and 2 weight parts of high density polyethylene (HDPE; density: 0.96 g/cm$^3$, MFR (at a temperature of 190°C with a load of 2.16 kg): 6.0 g/10 min) were used. As a component constituting the adhesive material layer 2, 80 weight parts of a syndiotactic propylene/ethylene copolymer (sPER; propylene component: 77 mole %, ethylene component: 23 mole %, MFR (at a temperature of 230°C with a load of 2.16 kg): 5.0 g/10 min) and 20 weight parts of syndiotactic polypropylene (sPP; FINAPLAS™ 1571, a product of ATOFINA Petrochemicals, Inc.; density: 0.87 g/cm$^3$, MFR (at a temperature of 230°C with a load of 2.16 kg): 10 g/10 min) were used.

Fig. 7 illustrates a chart showing the measurement of the DSC test of sPER/sPP = 80/20 (wt/wt) that was an adhesive material constituting the adhesive layer material 2. The melting temperature Tm had a peak value at 126.3°C and the heat of fusion ΔH was 7.97 J/g.

Then, materials of each layer were melted with an extruder equipped with a full-flighted screw. Molding conditions (melting temperature) were 220°C for the adhesive material layer 2 and 230°C for the base material layer 1, and molten resins of these two layers were laminated in a multi-layer die (co-extrusion temperature: 230°C). The extruded adhesive film was cooled, slit and wound around the core material 6.

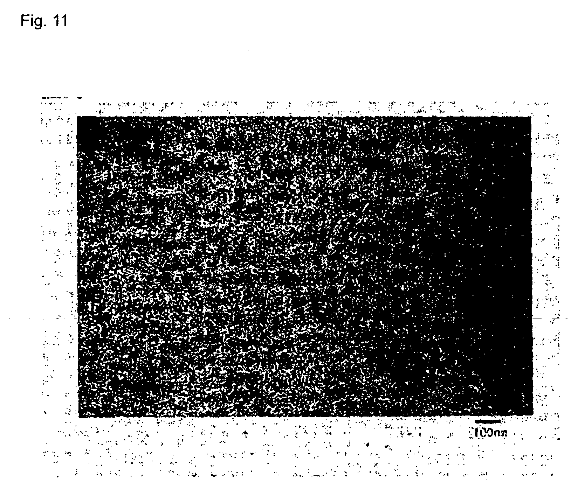

The adhesive film 10 thus obtained was a laminate of the single base material layer 1 and the adhesive material layer 2, and the thickness of each layer was 8 μm for the adhesive material layer 2 and 42 μm for the base material layer 1, and the total thickness was 50 μm. Fig. 11 illustrates a photograph of the cross-sectional surface of the adhesive material layer 2 observed by a transmission electron microscope (TEM). An alloy structure of sPER/sPP = 80/20 (wt/wt) in which a non-crystalline part was finely compatibilized at a 100 nm level into a crystalline part of a continuous network shape was observed from the TEM picture.

In Table 1, the layer structure of the adhesive film 10, components constituting each layer and the weight ratio thereof, thickness of each layer, and the melting temperature, heat of fusion, storage elastic modulus and loss coefficient of the adhesive material layer 2 are illustrated.

In Table 2, test results of ion chromatography, adhesion, adhesive stability under heat and pressure, and chemical resistance for the adhesive film 10 are illustrated. The adhesive film 10 was attached to a surface of a PET substrate (0.8 mm (thickness) x 300 mm x 300 mm), which is processed in the shape of a lens having an uneven surface, while it was heated at about 60°C, cut in a size of 100 mm x 100 mm using a rotating blade, kept in a heating bath at 60°C for 1 week, and then allowed to stand at 23°C and 50% RH for 1 day. A PET substrate was obtained, in which the adhesive film was easily peeled away when peeled manually, a cut surface was favorable, no adhesive residue was found on the surface processed into a lens shape, and optical functions were well maintained. Therefore, the adhesive film 10 of this Example can be used for the application in which four kinds of surface protection uses such as lens functions, heating treatment uses, cutting processing uses and transport storage uses are combined, in a process for producing and assembling lens substrates to be used in the fields of optical/display materials.

Example 2

As a material for each layer constituting the adhesive film 10, the following materials were used. That is, as a component constituting the outer layer 4, 80 weight parts of HDPE which was the same as the one used in Example 1 and 20 weight parts of low density polyethylene (LDPE; density: 0.92 g/cm$^3$, MFR (at a temperature of 190°C with a load of 2.16 kg): 7.2 g/10 min) were used. As a component constituting the intermediate layer 3, 88 weight parts of rPP, 10 weight parts of EB-A and 2 weight parts of HDPE, which were the same as the ones used in Example 1, were used. As a component constituting the adhesive material layer 2, 90 weight parts of a syndiotactic propylene/ethylene copolymer (sPER; propylene component: 77 mole %, ethylene component: 23 mole %, MFR (at a temperature of 230°C with a load of 2.16 kg): 5.0 g/10 min) and 10 weight parts of sPP which was the same as the one used in Example 1 were used.

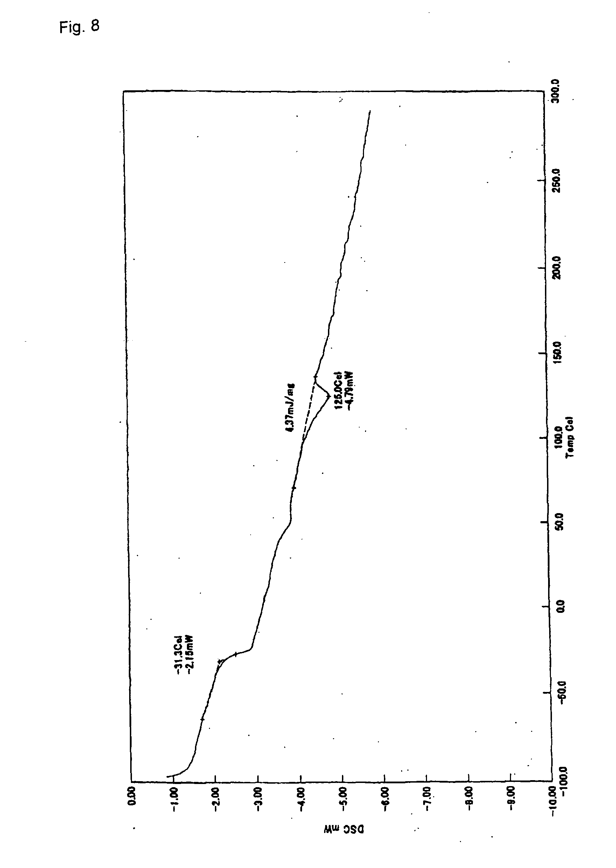

Fig. 8 illustrates a chart showing the measurement of the DSC test of sPER/sPP = 90/10 (wt/wt) that was an adhesive material constituting the adhesive layer material 2. The melting temperature Tm was 125.0°C and the heat of fusion ΔH was 4.37 J/g.

Then, materials of each layer were melted with an extruder equipped with a full-flighted screw. Molding conditions (melting temperature) were 220°C for the adhesive material layer 2, 230°C for the intermediate layer 3 and 220°C for the outer layer 4, and molten resins of these three layers were laminated in a multi-layer die (co-extrusion temperature: 230°C). The extruded adhesive film was cooled, slit and wound around the core material 6.

The adhesive film 10 thus obtained was a laminate of the base material layer 1 comprising the intermediate layer 3 and the outer layer 4, and the adhesive material layer 2, and the thickness of each layer was 8 μm for the adhesive material layer 2, 34 μm for the intermediate layer 3 and 8 μm for the outer layer 4, and the total thickness was 50 μm.

In Table 1, the layer structure of the adhesive film 10, components constituting each layer and the weight ratio thereof, thickness of each layer, and various test results of the adhesive material layer 2 are illustrated.

In Table 2, test results of ion chromatography, adhesion, adhesive stability under heating and pressure, and chemical resistance for the adhesive film 10 are illustrated.

The adhesive film 10 was attached to a surface of an acrylic substrate (1 mm (thickness) x 300 mm x 300 mm), which was treated with an antistatic agent in the optical fields, while it was heated at about 60°C, and put in a drying oven with a temperature set to 80°C for 30 minutes, cut in a size of 300 mm x 300 mm using a carbonic acid gas ($CO_2$) laser, kept in a heating bath at 60°C for 1 week, then allowed to stand at 23°C and 50% RH for 1 day. When the adhesive film 10 was manually peeled away, as a result, it was easily peeled away, no thread-like burr was found on the cut surface, and further, no contamination such as attachment of cutting dust or the like was found, no adhesive residue was found on the adherend surface, and antistatic functions were maintained (surface resistance: $2 \times 10^{12}$ $\Omega$ and charge pressure half-life: 15 seconds). That is, the adhesive film 10 of this Example can be used for the applications in which four kinds of surface protection uses for a surface treated with an antistatic agent or the like, heating treatment uses, cutting processing uses and transport storage uses are combined, in a process for producing and assembling lens substrates to be used in the fields of optical/display materials.

Example 3

As a material for each layer constituting the adhesive film 10, the following materials were used. That is, as a component constituting the outer layer 4, 80 weight parts of HDPE which was the same as the one used in Example 1 and 20 weight parts of LDPE which was the same as the one used in Example 2 were used. As a component constituting the intermediate layer 3, 88 weight parts of rPP, 10 weight parts of EB-A and 2 weight parts of HDPE, which were the same as the ones used in Example 1, were used. As a component constituting the adhesive material layer 2, 90 weight parts of an isotactic propylene/ethylene/1-butene copolymer (iPEBR; propylene component: 78 mole %, ethylene component: 16 mole %, 1-butene component: 6 mole %, MFR (at a temperature of 230°C with a load of 2.16 kg): 6 g/10 min) and 10 weight parts of isotactic polypropylene (iPP; density: 0.91 $g/cm^3$, MFR (at a temperature of 230°C with a load of 2.16 kg): 7 g/10 min) were used.

Fig. 8 illustrates a chart showing the measurement of the DSC test of iPEBR/iPP = 90/10 (wt/wt) that was an adhesive material constituting the adhesive material layer 2. The melting temperature Tm was 159.9°C and the heat of fusion $\Delta$H was 12.3 J/g.

Then, materials of each layer were melted with an extruder equipped with a full-flighted screw. Molding conditions (melting temperature) were 230°C for the adhesive material layer 2, 230°C for the intermediate layer 3 and 220°C for the outer layer 4, and molten resins of these three layers were laminated in a multi-layer die (co-extrusion temperature: 230°C). The extruded adhesive film was cooled and a peeling sheet 5 of Tohcello Separator™ SP T18 (PET-SP, thickness: 31 $\mu$m), manufactured by Tohcello Co., Ltd. was applied on the surface of the adhesive material layer, then slit and wound around the core material 6.

The adhesive film 10 thus obtained was a laminate of the base material layer 1 comprising the intermediate layer 3 and the outer layer 4, and the adhesive material layer 2, and the thickness of each layer was 12 $\mu$m for the adhesive material layer 2, 60 $\mu$m for the intermediate layer 3 and 8 $\mu$m for the outer layer 4, and the total thickness was 80 $\mu$m.

In Table 1, the layer structure of the adhesive film 10, components constituting each layer and the weight ratio thereof, thickness of each layer, and various test results of the adhesive material layer 2 are illustrated.

In Table 2, test results of ion chromatography, adhesion, adhesive stability under heat and pressure, and chemical resistance for the adhesive film 10 are illustrated.

The adhesive film 10 was attached to a mirror surface of a silicon wafer ($\Phi$: 100 mm, thickness: 0.525 mm) at room temperature, treated with a chemical solution of $HF/HNO_3/CH_3COOH$ = 1/9/3 (hydrofluoric acid/nitric acid/acetic acid) for 30 minutes, and then washed, dried in a heating bath at 60°C for 1 hour, and allowed to stand at 23°C and 50% RH for 7 days. When the adhesive film 10 was manually peeled away, as a result, the adhesive film was easily peeled away, a boundary between a silicon surface protected with the adhesive film 10 and a silicon surface which was not protected was seen clear, and no adhesive residue was found. That is, the adhesive film 10 of this Example can be used for the applications in which three kinds of treatment uses with a chemical solution, heating treatment uses, and transport storage uses are combined, in a process for producing wafers to be used in the semiconductor fields.

Example 4

As a material for each layer constituting the adhesive film 10, the following materials were used. That is, as a component constituting the outer layer 4, 80 weight parts of HDPE which was the same as the one used in Example 1 and 20 weight parts of LDPE which was the same as the one used in Example 2 were used. As a component constituting the intermediate layer 3, 88 weight parts of rPP 10 weight parts of EB-A and 2 weight parts of HDPE, which were the same as the ones used in Example 1, were used. As a component constituting the adhesive material layer 2, 7 weight parts of an isotactic propylene/ethylene/1-butene copolymer (iPEBR; propylene component: 78 mole %, ethylene component: 16 mole %, 1-butene component: 6 mole %, MFR (at a temperature of 230°C with a load of 2.16 kg): 6 g/10 min), 8 weight parts of isotactic polypropylene (iPP; density: 0.91 $g/cm^3$, MFR (at a temperature of 230°C with a load of 2.16 kg): 7 g/10 min), 15 weight parts of a styrene/isoprene/styrene block copolymer (SIS; SIS5229N, a product of JSR Corporation) and 5 weight parts of an ethylene/α-olefin cooligomer (LEO; Lucant™ HC-20, a product of Mitsui Chemicals, INC.) were used.

From the DSC test of an adhesive material constituting the adhesive material layer 2, the melting temperature was 159.5°C and the heat of fusion ΔH was 10.2 J/g.

Then, materials of each layer were melted with an extruder equipped with a full-flighted screw. Molding conditions (melting temperature) were 230°C for the adhesive material layer 2, 230°C for the intermediate layer 3 and 220°C for the outer layer 4, and molten resins of these three layers were laminated in a multi-layer die (co-extrusion temperature: 230°C). The extruded adhesive film was cooled, a peeling sheet 5 of PET-SP (thickness: 31 $\mu$m), which was the same as the one used in Example 3, was applied on the surface of the adhesive material layer, then slit and wound around the core material 6.

The adhesive film 10 thus obtained was a laminate of the base material layer 1 comprising two layers and the adhesive material layer 2, and the thickness of each layer was 12 $\mu$m for the adhesive material layer 2, 60 $\mu$m for the intermediate layer 3 and 8 $\mu$m for the outer layer 4, and the total thickness was 80 $\mu$m.

In Table 1, the layer structure of the adhesive film 10, components constituting each layer and the weight ratio thereof, thickness of each layer, and various test results of the adhesive material layer 2 are illustrated.

In Table 2, test results of ion chromatography, adhesion, adhesive stability under heating and pressure, and chemical resistance for the adhesive film 10 are illustrated. The adhesive film 10 was attached to a surface of a glass plate (300 mm x 300 mm, 1 mm (thickness)) at room temperature, treated with a chemical solution of $HF/HNO_3/CH_3COOH$ = 1/9/3 (hydrofluoric acid/nitric acid/acetic acid) for 30 minutes, and then washed and allowed to stand at 23°C and 50% RH for 7 days. When the adhesive film 10 was manually peeled away, as a result, the adhesive film was easily peeled away, a boundary between a glass surface protected with the adhesive film 10 and a glass surface which was not protected was seen clear, and no adhesive residue was found. That is, the adhesive film 10 of this Example can be used for the applications in which three kinds of surface protection uses, treatment uses with a chemical solution and transport storage uses are combined, in a process for producing wafers to be used in the semiconductor fields.

Comparative Example 1

As a material for each layer constituting the adhesive film 10, the following materials were used. That is, as a component constituting the outer layer 4, 80 weight parts of HDPE which was the same as the one used in Example 1 and 20 weight parts of LDPE which was the same as the one used in Example 2 were used. As a component constituting the intermediate layer 3, 88 weight parts of rPP, 10 weight parts of EB-A and 2 weight parts of HDPE, which were the same as the ones used in Example 1, were used. As a component constituting the adhesive material layer 2, 100 weight parts of a syndiotactic propylene/ethylene copolymer (sPER; propylene component: 77 mole %, ethylene component: 23 mole %, MFR (at a temperature of 230°C with a load of 2.16 kg): 5.0 g/10 min) were used.

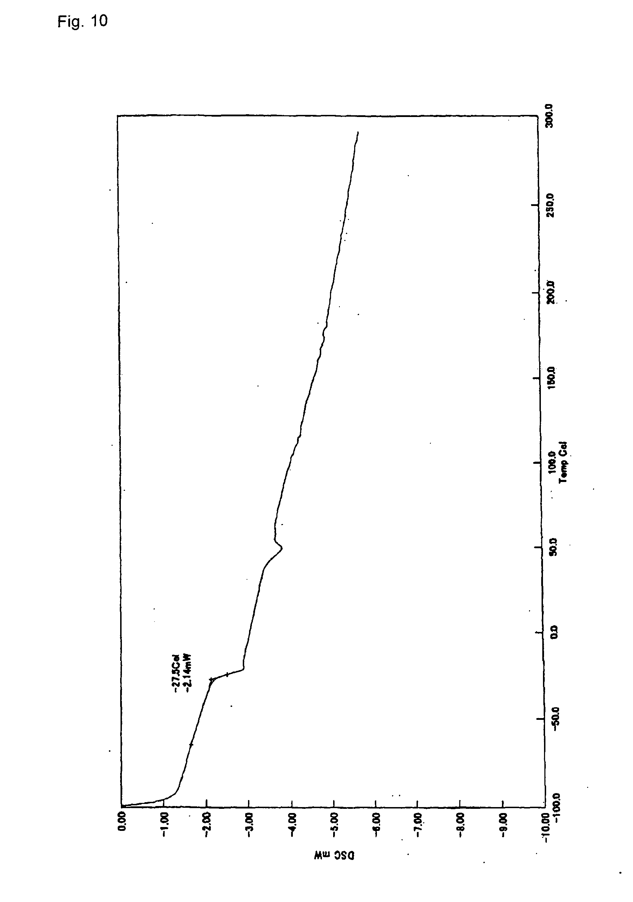

Fig. 10 illustrates a chart showing the measurement of the DSC test of sPER = 100 (wt) that was an adhesive material constituting the adhesive material layer 2. There was no endothermic peak in a temperature range of 80°C and 180°C, there was no melting temperature Tm, and the heat of fusion ΔH was 0.

Then, materials of each layer were melted with an extruder equipped with a full-flighted screw. Molding conditions (melting temperature) were 220°C for the adhesive material layer 2, 230°C for the intermediate layer 3 and 220°C for the outer layer 4, and molten resins of these three layers were laminated in a multi-layer die (co-extrusion temperature: 230°C). The extruded adhesive film was cooled, slit and wound around the core material 6.

The adhesive film 10 thus obtained was a laminate of the base material layer 1 comprising the intermediate layer 3 and the outer layer 4, and the adhesive material layer 2, and the thickness of each layer was 8 $\mu$m for the adhesive material layer 2, 34 $\mu$m for the intermediate layer 3 and 8 $\mu$m for the outer layer 4, and the total thickness was 50 $\mu$m.

In Table 1, the layer structure of the adhesive film 10, components constituting each layer and the weight ratio thereof, thickness of each layer, and various test results of the adhesive material layer 2 are illustrated.

In Table 2, test results of ion chromatography, adhesion, adhesive stability under heat and pressure, and chemical resistance for the adhesive film 10 are illustrated. In particular, in the adhesive stability test under heat and pressure, an adherend surface was not contaminated, whereas 1.8 (N/25 mm) of initial adhesion was increased to 5.5 (N/25 mm), an increase of about 3 times.

The adhesive film 10 was attached to a surface of an acrylic substrate (1 mm (thickness) x 300 mm x 300 mm) treated with an antistatic agent in the optical fields, while being heated at about 60°C, and put in a drying oven where a temperature is set at 80°C for 30 minutes, cut in a size of 300 mm x 300 mm using a carbonic acid gas ($CO_2$) laser, kept in a heating bath at 60°C for 1 week, then allowed to stand at 23°C and 50% RH for 1 day. When the adhesive film 10 was manually peeled away, as a result, no thread-like burr was found on a cut surface, no contamination such as attachment of cutting dust or the like was found, no adhesive residue was found on the adherend surface, and antistatic functions were maintained (surface resistance: 2 x $10^{12}$ $\Omega$, and charge pressure half-life: 15 seconds), except that the peeling property was deteriorated in such a way that peeling became heavy at a point where the width was 300 mm. That is, the adhesive film 10 of this Comparative Example is not preferably used, for example, for heating and cutting of lens substrates to be used in the fields of optical/display materials wherein demands for qualities are strict.

Comparative Example 2

As a material for each layer constituting the adhesive film 10, the following materials were used. That is, as a component constituting the outer layer 4, 80 weight parts of HDPE which was the same as the one used in Example 1 and 20 weight parts of LDPE which was the same as the one used in Example 2 were used. As a component constituting the intermediate layer 3, 88 weight parts of rPP, 10 weight parts of EB-A and 2 weight parts of HDPE, which were the same as the ones used in Example 1, were used. As a component constituting the adhesive material layer 2, 90 weight parts of a syndiotactic propylene/ethylene copolymer (sPER; propylene component: 77 mole %, ethylene component: 23 mole %, MFR (at a temperature of 230°C with a load of 2.16 kg): 5.0 g/10 min) and 10 weight parts of a 4-methypentene type polymer (4MP; TPX™ MX001, a product of Mitsui Chemicals, Inc.; density: 0.83 g/cm$^3$, MFR (at a temperature of 260°C with a load of 5.00 kg): 26 g/10 min) were used.

From the DSC test of an adhesive material constituting the adhesive material layer 2, the melting temperature Tm was 221.7°C and the heat of fusion ΔH was 3.6 J/g.

Then, materials of each layer were melted with an extruder equipped with a full-flighted screw. Molding conditions (melting temperature) were 280°C for the adhesive material layer 2, 230°C for the intermediate layer 3 and 230°C for the outer layer 4, and molten resins of these three layers were laminated in a multi-layer die (co-extrusion temperature: 260°C). The extruded adhesive film was cooled, slit and wound around the core material 6.

The adhesive film 10 thus obtained was a laminate of the base material layer 1 comprising the intermediate layer 3 and the outer layer 4, and the adhesive material layer 2, and the thickness of each layer was 8 μm for the adhesive material layer 2, 34 μm for the intermediate layer 3 and 8 μm for the outer layer 4, and the total thickness was 50 μm.

In Table 1, the layer structure of the adhesive film 10, components constituting each layer and the weight ratio thereof, thickness of each layer, and various test results of the adhesive material layer 2 are illustrated.

In Table 2, test results of ion chromatography, adhesion, adhesive stability under heat and pressure, and chemical resistance for the adhesive film 10 are illustrated. In particular, in the adhesive stability test under heat and pressure, an adherend surface was not contaminated, whereas 1.7 (N/25 mm) of initial adhesion was increased to 3.3 (N/25 mm), an increase of about 2 times.

The adhesive film 10 was attached to a surface of an acrylic substrate (1 mm (thickness) x 300 mm x 300 mm) treated with an antistatic agent in the optical fields, while being heated at about 60°C, and put in a drying oven where a temperature was set at 80°C for 30 minutes, cut in a size of 300 mm x 300 mm using a carbonic acid gas (CO$_2$) laser, kept in a heating bath at 60°C for 1 week, then allowed to stand at 23°C and 50% RH for 1 day. As a result, partial floating occurred from an edge. When the adhesive film 10 was manually peeled away, as a result, the peeling property was deteriorated in such a way that peeling became heavy at a point where the width was 300 mm, and an adhesive residue was attached to the cut edge. That is, the adhesive film 10 of this Comparative Example is not preferably used, for example, for heating and cutting of lens substrates used in the fields of optical/display materials wherein demands for qualities are strict.

Comparative Example 3

As a material for each layer constituting the adhesive film 10, the following materials were used. That is, as a component constituting the outer layer 4, 80 weight parts of HDPE which was the same as the one used in Example 1 and 20 weight parts of LDPE which was the same as the one used in Example 2 were used. As a component constituting the intermediate layer 3, 88 weight parts of rPP, 10 weight parts of EB-A and 2 weight parts of HDPE, which were the same as the ones used in Example 1, were used. As a component constituting the adhesive material layer 2, 99 weight parts of an isotactic propylene/ethylene/1-butene copolymer (iPEBR; propylene component: 78 mole %, ethylene component: 16 mole %, 1-butene component: 6 mole %, MFR (at a temperature of 230°C with a load of 2.16 kg): 6 g/10 min) and 1 weight part of rPP which was the same as the one used in Example 1 were used.

From the DSC test of an adhesive material constituting the adhesive material layer 2, the melting temperature Tm was 135.2°C and the heat of fusion ΔH was 0.8 J/g.

Then, materials of each layer were melted with an extruder equipped with a full-flighted screw. Molding conditions (melting temperature) were 220°C for the adhesive material layer 2, 230°C for the intermediate layer 3 and 220°C for the outer layer 4, and molten resins of these three layers were laminated in a multi-layer die (co-extrusion temperature: 230°C). The extruded adhesive film was cooled, slit and wound around the core material 6.

The adhesive film 10 thus obtained was a laminate of the base material layer 1 comprising the intermediate layer 3 and the outer layer 4, and the adhesive material layer 2, and the thickness of each layer was 12 μm for the

adhesive material layer 2, 60 μm for the intermediate layer 3 and 8 μm for the outer layer 4, and the total thickness was 80 μm.

In Table 1, the layer structure of the adhesive film 10, components constituting each layer and the weight ratio thereof, thickness of each layer, and various test results of the adhesive material layer 2 are illustrated.

In Table 2, test results of ion chromatography, adhesion, adhesive stability under heat and pressure, and chemical resistance for the adhesive film 10 are illustrated. In particular, in the adhesive stability test under heat and pressure, an adherend surface was not contaminated, whereas 5.3 (N/25 mm) of initial adhesion was increased to 8.5 (N/25 mm), an increase of about 1.6 times.

The adhesive film 10 was attached to a mirror surface of a silicon wafer (Φ: 100 mm, thickness: 0.525 mm) at room temperature, treated with a chemical solution of HF/HNO$_3$/CH$_3$COOH = 1/9/3 (hydrofluoric acid/nitric acid/acetic acid) for 30 minutes, and then washed, dried in a heating bath at 60°C for 1 hour, and allowed to stand at 23°C and 50% RH for 7 days. When the adhesive film 10 was manually peeled away, as a result, breakage of the silicon wafer was caused due to the peeling of the adhesive film being heavy. Further, a trouble of infiltration of the chemical solution from the attached boundary surface occurred. That is, the adhesive film 10 of this Comparative Example is not preferably used, for example, for treating with a chemical solution in a production process of wafers to be used in the semiconductor fields.

Comparative Example 4

As a material for each layer constituting the adhesive film 10, the following materials were used. That is, as a component constituting the outer layer 4, 80 weight parts of HDPE which was the same as the one used in Example 1 and 20 weight parts of LDPE which was the same as the one used in Example 2 were used. As a component constituting the intermediate layer 3, 88 weight parts of rPP, 10 weight parts of EB-A and 2 weight parts of HDPE, which were the same as the ones used in Example 1, were used. As a component constituting the adhesive material layer 2, 100 weight parts of a propylene/1-butene/4-methyl-1-pentene copolymer (PB (4MP); propylene component: 50 mole %, 1-butene component: 23 mole %, 4-methyl-1-pentene component: 27 mole %, MFR (at a temperature of 230°C with a load of 2.16 kg): 8.0 g/10 min) were used.

From the DSC test of an adhesive material constituting the adhesive material layer 2, the melting temperature Tm was 64°C and the heat of fusion ΔH was 0.3 J/g.

Then, materials of each layer were melted with an extruder equipped with a full-flighted screw. Molding conditions (melting temperature) were 220°C for the adhesive material layer 2, 230°C for the intermediate layer 3 and 220°C for the outer layer 4, and molten resins of these three layers were laminated in a multi-layer die (co-extrusion temperature: 230°C). The extruded adhesive film was cooled, slit and wound around the core material 6.

The adhesive film 10 thus obtained was a laminate of the base material layer 1 comprising the intermediate layer 3 and the outer layer 4, and the adhesive material layer 2, and the thickness of each layer was 12 μm for the adhesive material layer 2, 60 μm for the intermediate layer 3 and 8 μm for the outer layer 4, and the total thickness was 80 μm.

In Table 1, the layer structure of the adhesive film 10, components constituting each layer and the weight ratio thereof, thickness of each layer, and various test results of the adhesive material layer 2 are illustrated.

In Table 2, test results of ion chromatography, adhesion, adhesive stability under heat and pressure, and chemical resistance for the adhesive film 10 are illustrated.

The adhesive film 10 was attached to a mirror surface of a silicon wafer (Φ 100 mm, thickness 0.525 mm) at room temperature, treated with a chemical solution of HF/HNO$_3$/CH$_3$COOH = 1/9/3 (hydrofluoric acid/nitric acid/acetic acid) for 30 minutes, and then washed, dried at in a heating bath at 60°C 1 hour, and allowed to stand at 23°C and 50% RH for 7 days. When the adhesive film 10 was manually peeled away, as a result, a trouble of the infiltration of the chemical solution from the attached boundary surface occurred. That is, the adhesive film 10 of this Comparative Example is not preferably used, for example, for treating with a chemical solution in a production process of wafers to be used in the semiconductor fields.

[Table 1]

| | | Example 1 | Example 2 | Example 3 | Example 4 |
|---|---|---|---|---|---|
| Base material layer 1 Component: Weight ratio (thickness) | Outer layer 4 Component: Weight ratio (thickness) | rPP 88 EB-A 10 HDPE 2 (42 $\mu$m) | HDPE 80 LDPE 20 (8 $\mu$m) | HDPE 80 LDPE 20 (8 $\mu$m) | HDPE 80 LDPE 20 (8 $\mu$m) |
| | Intermediate layer 3 Component: Weight ratio (thickness) | | rPP 88 EB-A 10 HDPE 2 (34 $\mu$m) | rPP 88 EB-A 10 HDPE 2 (60 $\mu$m) | rPP 88 EB-A 10 HDPE 2 (60 $\mu$m) |
| Adhesive layer 2 (thickness) | Component: Weight ratio | sPER 80 sPP 20 (8 $\mu$m) | sPER 90 sPP 10 (8 $\mu$m) | iPEBR 90 iPP 10 (12 $\mu$m) | iPEBR 72 iPP 8 SIS 15 LEO 5 (12 $\mu$m) |
| DSC | Melting temperature Tm (°C) | 126.3 | 125.0 | 159.9 | 159.5 |
| | Heat of fusion $\Delta$H (J/g) | 7.97 | 4.37 | 12.3 | 10.2 |
| Storage elastic modulus G' (Mpa) | 20°C 50°C 80°C | 15 15 10 | 10 10 8.2 | 15 15 10 | 7.5 7.0 6.2 |
| Loss coefficient tan $\delta$ (-) | 20°C 50°C 80°C | 0.14 0.13 0.18 | 0.18 0.16 0.20 | 0.10 0.15 0.20 | 0.15 0.18 0.20 |
| Loss coefficient tan $\delta$ | Peak temperature (°C) | -16 | -16 | -10 | -10 |

In Table 1, the thickness of each layer refers to a value measured by observing a cross-sectional surface of the adhesive film using an optical microscope.

[Table 2]

| | | Comparative Example 1 | Comparative Example 2 | Comparative Example 3 | Comparative Example 4 |
|---|---|---|---|---|---|
| Base material layer 1 Component: Weight ratio (thickness) | Outer layer 4 Component : Weight ratio (thickness) | HDPE 80 LDPE 20 (8 $\mu$m) | HDPE 80 LDPE 20 (8 $\mu$m) | HDPE 80 LDPE 20 (8 $\mu$m) | HDPE 80 LDPE 20 (8 $\mu$m) |
| | Intermediate layer 3 Component : Weight ratio (thickness) | rPP 88 EB-A 10 HDPE 2 (34 $\mu$m) | rPP 88 EB-A 10 HDPE 2 (34 $\mu$m) | rPP 88 EB-A 10 HDPE 2 (60 $\mu$m) | RPP 88 EB-A 10 HDPE 2 (60 $\mu$m) |
| Adhesive layer 2 (thickness) | Component : Weight ratio | SPER 100 (8 $\mu$m) | sPER 90 4MP 10 (8 $\mu$m) | iPEBR 90 rPP 10 (12 $\mu$m) | PB (4MP) 100 (12 $\mu$m) |
| DSC | Melting temperature Tm (°C) | - | 221.7 | 135.2 | 64 |
| | Heat of fusion $\Delta$H (J/g) | - | 3.6 | 0.8 | 0.3 |
| Storage elastic modulus G' (Mpa) | 20°C 50°C 80°C | 5.5 3.0 0.1 | 8.4 4.2 3.5 | 9.2 2.0 0.6 | 10.2 2.5 0.6 |
| Loss coefficient tan $\delta$ (-) | 20°C 50°C 80°C | 0.08 0.15 0.40 | 0.08 0.14 0.18 | 0.16 0.21 0.47 | 1.0 0.6 0.3 |
| Loss coefficient tan $\delta$ | Peak temperature (°C) | -16 | -16 | -14 | +12 |

In Table 2, the thickness of each layer refers to a value measured by observing a cross-sectional surface of the adhesive film using an optical microscope.

**[Table 3]**

| | | Example 1 | Example 2 | Example 3 | Example 4 |
|---|---|---|---|---|---|
| Ion chromatography (ppm) | $Na^+$ | <0.01 | <0.01 | <0.01 | <0.01 |
| | $K^+$ | <0.01 | <0.01 | <0.01 | <0.01 |
| | $Cl^-$ | 0.04 | 0.04 | 0.04 | 0.05 |
| | $F^-$ | <0.01 | <0.01 | < 0.01 | < 0.01 |
| | $NO_3^-$ | <0.01 | <0.01 | <0.01 | <0.01 |
| | $NO_2^-$ | <0.01 | <0.01 | <0.01 | <0.01 |
| | $PO_4^{3-}$ | <0.01 | < 0.01 | < 0.01 | <0.01 |
| | $SO_4^{2-}$ | < 0.01 | < 0.01 | < 0.01 | < 0.01 |
| | $Fe^{2+}$ | <0.01 | <0.01 | <0.01 | <0.01 |
| | $Cu^{2+}$ | <0.01 | <0.01 | <0.01 | <0.01 |
| | $Cr^{3+}$ | <0.01 | <0.01 | <0.01 | <0.01 |
| | $Al^{3+}$ | < 0.01 | < 0.01 | < 0.01 | < 0.01 |
| | $Zn^{2+}$ | 0.04 | 0.04 | 0.05 | 0.05 |
| | $Ni^{2+}$ | < 0.01 | < 0.01 | <0.01 | < 0.01 |
| Adhesion (N/25 mm) | | 1.0 | 2.2 | 4.0 | 5.2 |
| Adhesive stability under heat and pressure | | O | O | O | O |
| Chemical resistance | 2N hydrochloric acid (23°C) | O | O | O | O |
| | 2N hydrochloric acid (70°C) | O | O | O | O |
| | 2N sulfuric acid (23°C) | O | O | O | O |
| | 2N sulfuric acid (70°C) | O | O | O | O |
| | 20 wt% NaOHaq (23°C) | O | O | O | O |
| | 20 wt% NaOHaq (70°C) | O | O | O | O |
| | 10 wt% NH3aq (23°C) | O | O | O | O |
| | Isopropanol (23°C) | O | O | O | O |
| | Acetone (23°C) | O | O | O | O |
| | Ethyl acetate (23°C) | O | O | O | O |

From Table 3, it was found that the adhesive film in Examples exhibited excellent adhesion and no increase in adhesion under heating and warming, maintained an easy peeling property even after a certain period of time passed, and left no contaminant on an adherend surface. Further, chemical resistance under warming against an acid or an alkali, or even against organic solvents was found to be excellent.

[Table 4]

| | | Comparative Example 1 | Comparative Example 2 | Comparative Example 3 | Comparative Example 4 |
|---|---|---|---|---|---|
| Ion chromatography (ppm) | $Na^+$ | <0.01 | <0.01 | <0.01 | <0.01 |
| | $K^+$ | <0.01 | <0.01 | <0.01 | <0.01 |
| | $Cl^-$ | 0.04 | 0.04 | 0.04 | 0.05 |
| | $F^-$ | <0.01 | <0.01 | <0.01 | <0.01 |
| | $NO_3^-$ | <0.01 | <0.01 | <0.01 | <0.01 |
| | $NO_2^-$ | <0.01 | <0.01 | <0.01 | <0.01 |
| | $PO_4^{3-}$ | <0.01 | <0.01 | <0.01 | <0.01 |
| | $SO_4^{2-}$ | <0.01 | <0.01 | <0.01 | <0.01 |
| | $Fe^{2+}$ | <0.01 | < 0.01 | < 0.01 | < 0.01 |
| | $Cu^{2+}$ | <0.01 | <0.01 | <0.01 | <0.01 |
| | $Cr^{3+}$ | <0.01 | <0.01 | <0.01 | <0.01 |
| | $Al^{3+}$ | <0.01 | <0.01 | <0.01 | <0.01 |
| | $Zn^{2+}$ | 0.04 | 0.04 | 0.04 | 0.05 |
| | $Ni^{2+}$ | <0.01 | <0.01 | <0.01 | <0.01 |
| Adhesion (N/25 mm) | | 1.8 | 1.7 | 5.3 | 2.1 |
| Adhesive stability under heat and pressure | | X | X | X | O |

| Chemical resistance | | Comparative Example 1 | Comparative Example 2 | Comparative Example 3 | Comparative Example 4 |
|---|---|---|---|---|---|
| | 2N hydrochloric acid (23°C) | O | O | O | O |
| | 2N hydrochloric acid (70°C) | O | O | O | O |
| | 2N sulfuric acid (23°C) | O | O | O | O |
| | 2N sulfuric acid (70°C) | O | O | O | O |
| | 20 wt% NaOHaq (23°C) | O | O | O | O |
| | 20 wt% NaOHaq (70°C) | O | O | O | O |
| | 10 wt% NH3aq (23°C) | O | O | O | O |
| | Isopropanol (23°C) | O | O | O | O |
| | Acetone (23°C) | O | O | O | O |
| | Ethyl acetate (23°C) | O | O | O | O |

EP 1 734 094 A1

INDUSTRIALAPPLICABILITY

The present invention provides an adhesive material used in the fields of electronic circuit materials, semiconductor materials, optical materials or the like wherein demands for performance and qualities are strict, and an adhesive film using the adhesive material. In particular, the adhesive film of the present invention provides an adhesive film particularly having high heat resistance, adhesive characteristics with no adhesive residue, and further chemical stability for surface protection uses, transport or storage uses, treatment uses with a chemical solution, heating treatment uses, and grinding or polishing processing uses.

Furthermore, the adhesive film of the present invention is an adhesive material made of olefinic materials and capable of solving the environmental problems.

## Claims

1. An adhesive material satisfying the following requirements (a) and (b):

    (a) the adhesive material comprises at least one kind of an olefinic polymer; and
    (b) by measurement according to a differential scanning calorimetry test, the melting temperature Tm is in the range of 80°C to 180°C and the heat of fusion $\Delta H$ is at least 1 J/g.

2. The adhesive material according to claim 1, further satisfying the following requirement (c):

    (c) the storage elastic modulus G' at a temperature range of 20°C to 80°C is in the range of 0.1 to 50 MPa while the loss coefficient tan $\delta$ at a temperature range of 20°C to 80°C is at least 0.05.

3. The adhesive material according to claim 2, further satisfying the following requirement (d):

    (d) the peak of the loss coefficient tan $\delta$ is in the range of -20°C to +10°C.

4. The adhesive material according to claim 1, wherein the olefinic polymer contains a propylene/olefin copolymer having tacticity (hereinafter referred to as PX) obtained by polymerizing 90 to 60 mole % of the propylene component with 10 to 40 mole % of at least one olefin component selected from ethylene and olefins having 4 to 12 carbon atoms.

5. The adhesive material according to claim 4, further comprising an additional olefinic polymer (hereinafter referred to as PY), wherein the additional olefinic polymer (PY) is a polypropylene having the same tacticity as the propylene/olefin copolymer having tacticity (PX), and wherein the polymer ratio {(PX)/(PY)} is in the range of a weight ratio of 99/1 to 40/60.

6. An adhesive film with an adhesive material layer laminated on at least one surface of a base material layer, wherein the adhesive material layer satisfies the following requirements (a) and (b):

    (a) the adhesive material layer comprises at least one kind of an olefinic polymer; and
    (b) by measurement according to a differential scanning calorimetry test, the melting temperature Tm is in the range of 80°C to 180°C and the heat of fusion $\Delta H$ is at least 1 J/g.

7. The adhesive film according to claim 6, wherein the adhesive material layer further satisfies the following requirement (c):

    (c) the storage elastic modulus G' at a temperature range of 20°C to 80°C is in the range of 0.1 to 50 MPa while the loss coefficient tan $\delta$ at a temperature range of 20°C to 80°C is at least 0.05.

8. The adhesive film according to claim 6, wherein the adhesive material layer further satisfies the following requirement (d):

    (d) the peak of the loss coefficient tan $\delta$ is in the range of -20°C to +10°C.

9. The adhesive film according to claim 6, wherein the olefinic polymer contains a propylene/olefin copolymer having tacticity (PX) obtained by polymerizing 90 to 60 mole % of the propylene component with 10 to 40 mole % of at least one olefin component selected from ethylene and olefins having 4 to 12 carbon atoms.

10. The adhesive film according to claim 9, further comprising an additional olefinic polymer (PY), wherein the additional olefinic polymer (PY) is a polypropylene having the same tacticity as the propylene/olefin copolymer having tacticity (PX), and wherein the polymer ratio {(PX)/(PY)} is in the range of a weight ratio of 99/1 to 40/60.

11. The adhesive film according to claim 6, wherein the total content ratio of each ion extracted by pure water is not more than 1 ppm.

12. The adhesive film according to claim 6, wherein the base material layer and the adhesive material layer are formed into a film by a co-extrusion method.

13. A method of using the adhesive film as described in claim 6, which comprises using the adhesive film for surface protection in combination of at least one application selected from treatment with a chemical solution, heating treatment, grinding processing, polishing processing, cutting processing and transport storage.

Fig. 1

Fig. 2

Fig. 3

Fig. 4

Fig. 5

Fig. 6

Fig. 7

Fig. 8

Fig. 9

31

Fig. 10

Fig. 11

## INTERNATIONAL SEARCH REPORT

International application No.

PCT/JP2005/004960

| A. CLASSIFICATION OF SUBJECT MATTER |
|---|
| Int.Cl$^7$ C09J7/02, 123/00, 123/14 |

According to International Patent Classification (IPC) or to both national classification and IPC

| B. FIELDS SEARCHED |
|---|
| Minimum documentation searched (classification system followed by classification symbols)<br> Int.Cl$^7$ C09J1/00-210/10, C08L1/00-101/14 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2841509 B2 (Mitsui Chemicals, Inc.),<br>23 October, 1998 (23.10.98),<br>Full text<br>& JP 03-062838 A | 1,4,6,9,<br>11-13<br>2,3,5,7,8,<br>10 |
| X<br>Y | JP 2000-191853 A (Mitsui Chemicals, Inc.),<br>11 July, 2000 (11.07.00),<br>Full text<br>(Family: none) | 1-12<br>13 |
| X<br>Y | JP 2002-519497 A (Exxon chemical Patents Inc.),<br>02 July, 2002 (02.07.02),<br>Full text<br>& WO 2000/01766 A1 & AU 9949623 A<br>& EP 1098934 A1 & KR 2001053371 A<br>& EP 1522553 A1 | 1-12<br>13 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br> 15 June, 2005 (15.06.05) | Date of mailing of the international search report<br> 05 July, 2005 (05.07.05) |
|---|---|
| Name and mailing address of the ISA/<br> Japanese Patent Office | Authorized officer |
| Facsimile No. | Telephone No. |

Form PCT/ISA/210 (second sheet) (January 2004)

EP 1 734 094 A1

**INTERNATIONAL SEARCH REPORT**

| International application No. |
|---|
| PCT/JP2005/004960 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-155249 A (Mitsui Chemicals, Inc.), 28 May, 2002 (28.05.02), Full text & WO 2002/42389 A1 & US 2003/054643 A1 & CN 1395602 A & EP 1347025 A1 & TW 574341 A | 2,3,7,8 |
| A | JP 2003-147135 A (Mitsui Chemicals, Inc.), 21 May, 2003 (21.05.03), Full text (Family: none) | 1-13 |
| A | JP 2003-183463 A (Atofina), 03 July, 2003 (03.07.03), Full text & FR 2830868 A1 & US 2003/092844 A1 & KR 2003030979 A & CA 2407183 A1 & CN 1436809 A & EP 1306406 A1 | 1-13 |
| A | JP 11-100413 A (Clariant GmbH.), 13 April, 1999 (13.04.99), Full text & EP 890584 A1 & DE 19729833 A1 & CN 1206720 A & US 6143846 A & US 6331590 B1 & EP 890584 B1 & DE 59804026 T & ES 2176859 T3 | 1-13 |
| A | JP 2003-511541 A (The Procter & Gamble Co.), 25 March, 2003 (25.03.03), Full text & WO 2001/27213 A1 & AU 200078469 A & BR 200014609 A & EP 1238035 A1 & KR 2002035897 A & CN 1378580 A & MX 2002003509 A1 & AU 776090 B2 & US 6863989 B1 | 1-13 |
| P,X P,A | JP 2004-307838 A (Idemitsu Petrochemical Co., Ltd.), 04 November, 2004 (04.11.04), Full text (Family: none) | 1,4,6,9,11 2,3,5,7,8, 10,12,13 |

Form PCT/ISA/210 (continuation of second sheet) (January 2004)

35

**EP 1 734 094 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003213485 A
- JP 11315175 A
- JP 7233354 A
- JP 7048417 A
- JP 2003048286 A
- JP 8301934 A
- JP 9012635 A

### Non-patent literature cited in the description

- *Hitachi Chemical Technical Report,* 2002, vol. 32, 7-14
- *Hitachi Chemical Technical Report,* 2003, vol. 41, 23-26
- Handbook of Pressure Sensitive Adhesive Technology first. Nikkan Kensetsu Kogyo Shimbun, 31 March 1997